# EUROPEAN PATENT SPECIFICATION

(11) **EP 2 878 478 B1**
(45) Date of publication and mention of the grant of the patent: **05.12.2018**
(21) Application number: 14191260.0
(22) Date of filing: 31.10.2014
(51) Int. Cl.: B60K 37/06

(54) **SADDLE TYPE VEHICLE WITH DISPLAY ON THE STEERING HANDLE FOR INDICATING APPROPRIATE VEHICLE CHARACTERISTIC CHANGES**
SATTELFAHRZEUG MIT ANZEIGE AUF DEM LENKER ZUR ANZEIGE VON GEEIGNETEN FAHRZEUGEIGENSCHAFTSÄNDERUNGEN
VÉHICULE À SELLE AVEC AFFICHAGE AU GUIDON POUR INDIQUER LES CHANGEMENTS APPROPRIÉS DE CARACTÉRISTIQUES

(30) Priority: 31.10.2013 JP 2013227010
(43) Date of publication of application: 03.06.2015
(73) Proprietor: Yamaha Hatsudoki Kabushiki Kaisha, Iwata-shi, Shizuoka 438-8501 (JP)
(72) Inventor: Watanabe, Takashi, Iwata-shi, Shizuoka 438-8501 (JP); Yagi, Toshiki, Iwata-shi, Shizuoka 438-8501 (JP)
(74) Representative: Grünecker Patent- und Rechtsanwälte PartG mbB

(56) References cited:
- EP-A2- 2 211 075
- DE-A1- 19 941 962
- DE-A1-102010 046 918
- JP-A- H0 978 636
- JP-U- S61 176 685
- US-A1- 2006 017 552

## Description

The present invention relates to a saddle type vehicle and **is directed to** change a setting state of a controller capable of changing characteristics of a saddle type vehicle, and particularly relates to a saddle type vehicle that the rider is allowed to change setting contents.

Prior art document DE 10 2010 046 918 A1 discloses a system that has driver assistance modules comprising a set of sub-functions, and a control unit for adjusting the sub-functions of the driver assistance modules, where the driver assistance modules includes a track recognition system. The sub-functions of the driver assistance modules are assigned to two groups. The degree of security for the sub-functions of the driver assistance modules is centrally set for a group of control devices. The degree of automation for the sub-functions of the driver assistance modules is centrally set for another group of control devices.

Prior art document EP 2 211 075 A2 shows a saddle type vehicle according the preamble of claim 1 and relates to a gear change instruction apparatus for a friction clutch device having a driving plate and a driven plate and for a transmission having a plurality of gear positions. The gear change instruction apparatus being configured to generate an instruction to change the gear position of the transmission and comprising: an estimator configured to estimate a calorific value by friction between the driving plate and the driven plate in the friction clutch device; a determiner configured to determine whether a change in the gear position of the transmission is required based on the calorific value estimated by the estimator; and a notifier configured to make a notification to an operator of the gear change instruction apparatus to change the gear position of the transmission when the determiner determines that the gear position of the transmission must be changed, and to a gear change instruction method.

In a saddle type vehicle having plural devices capable of changing characteristics of a vehicle such as a traction control system, it has recently been required to display, on a display unit, a setting state to allow the devices to easily change the characteristics.

Furthermore, in saddle type vehicles such as motorcycles, the size of the screen of the display unit tends to be restricted. For example, when the display unit is provided around a handle, the space around the handle in the saddle type vehicle is restricted for providing a device therein, and hence the size of the display unit tends to be restricted.

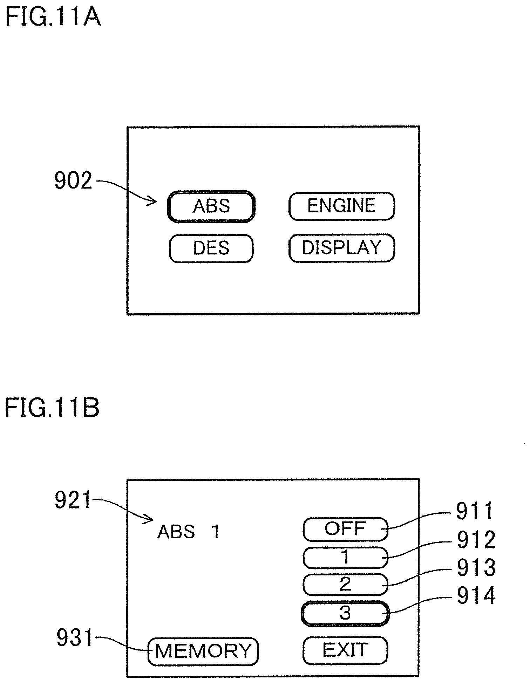

In consideration of this, a saddle type vehicle of Non-Patent Literature 1 ("Owner's Manual (written in Japanese) SUPERBIKE 1199PANIGALE S 1199PANIGALE SABS", Ducati Motor Holding spa, February 2012, cod 913.7.190.1B), on which a display unit displaying plural sets of information regarding the state of the vehicle by large characters is mounted, has been sold. On this saddle type vehicle, a throttle valve controller capable of changing the characteristic of the output of an engine which is a power source and an electronic control suspension unit capable of changing the damping force characteristic of a suspension of the vehicle are mounted. Furthermore, to change the setting state of the controller capable of changing the characteristics of the vehicle at will, an operation unit operable by the rider is provided. In addition to the above, as shown in FIG. 11, plural controllers capable of changing the vehicle characteristic are displayed by texts on the display screen of the display unit.

In addition to the above, to downsize the display unit as compared to previous ones, a problem of small and hard-to-see display screen and texts is resolved by enlarging characters on each screen by improving a screen on which the setting state of the controller capable of changing the vehicle characteristics is changed. More specifically, to begin with, a screen shown in FIG. 11A for selecting vehicle characteristic change controllers is displayed. This screen includes buttons 902 indicating the vehicle characteristic change controllers, respectively. Among these buttons 902, a button 902 corresponding to a particular vehicle characteristic change controller is selected. With this, the current state of the selected vehicle characteristic change controller is displayed by a character string 921, and buttons 911 to 914 indicating levels to each of which the vehicle characteristic is changeable are displayed. A button corresponding to a level to which the rider wishes to change is selected from the buttons, and a button 931 for confirmation is selected. As a result, the current state is changed. As such, a screen for changing the setting state is provided for each vehicle characteristic change controller, and a menu for selecting one of these screens is displayed independently of the screens for changing the setting state. Because the amount of information in each screen is restrained in this way and the texts are enlarged in each screen, the texts are easily recognized. As such, even on the small display unit mounted on the saddle type vehicle, the setting state of the vehicle characteristic change controller is easily changeable.

The market, however, requires to realize more rapid and easy change of the setting state of the controller which is capable of changing the characteristics of the vehicle, even if the size of the display unit mounted on the saddle type vehicle is restricted.

An object of the present invention is to provide a saddle type vehicle in which, on a display unit which is mounted on the saddle type vehicle and has a restricted screen size, the setting state of a controller capable of changing characteristics of the vehicle is changed more easily and more rapidly.

According to the present invention the object is solved by saddle type vehicle having the features of independent claim 1. Preferred embodiments are laid down in the dependent claims.

A saddle type vehicle of the present teaching includes: a vehicle body frame supporting a power source; a seat mounted on the vehicle body frame; a steering handle provided forward of the seat; a right grip section and a left grip section which are provided at a right end portion and a left end portion of the steering handle in a vehicle left/right direction, respectively; a display unit which is provided forward of the seat in a vehicle forward/rearward direction and between the right grip section and the left grip section in the vehicle left/right direction, and includes a display surface; an operation unit which is supported by the steering handle, is configured to be operable by a hand gripping at least one of the right grip section and the left grip section, and is electrically connected to the display unit; and a first vehicle characteristic change controller and a second vehicle characteristic change controller which are configured to be capable of changing, by selecting one of characteristic states, a first vehicle characteristic and a second vehicle characteristic which are different from each other, in accordance with a content of an operation of the operation unit, the display unit is configured to display, on the display surface, a first vehicle characteristic icon indicating the first vehicle characteristic and first vehicle characteristic state icons indicating the characteristic states of the first vehicle characteristic in an aspect of being lined up in one of the vehicle forward/rearward direction and the vehicle left/right direction, a second vehicle characteristic icon indicating the second vehicle characteristic and second vehicle characteristic state icons indicating the characteristic states of the second vehicle characteristic in an aspect of being lined up in the one of vehicle forward/rearward direction and the vehicle left/right direction, the first vehicle characteristic icon and the second vehicle characteristic icon in an aspect of being lined up in the other one of the vehicle forward/rearward direction and the vehicle left/right direction, and the first vehicle characteristic state icons and the second vehicle characteristic state icons in an aspect of being lined up in the other one of the vehicle forward/rearward direction and the vehicle left/right directions, at least an icon corresponding to a currently selected characteristic state among the first vehicle characteristic state icons and the second vehicle characteristic state icons in an aspect different from aspects of the other icons.

According to the present teaching, for each vehicle characteristic, vehicle characteristic state icons are displayed to be lined up in one of a vehicle forward/rearward direction and a vehicle left/right direction with a vehicle characteristic icon corresponding to the icons. Furthermore, in regard to plural vehicle characteristics, vehicle characteristic icons are displayed to be lined up in the other one of the vehicle forward/rearward direction and the vehicle left/right direction. Furthermore, first vehicle characteristic state icons corresponding to a first vehicle characteristic and second vehicle characteristic state icons corresponding to a second vehicle characteristic are displayed to be lined up in the other one of vehicle forward/rearward direction and the vehicle left/right direction. For the reason above, even when plural vehicle characteristics are changeable, the mutual relations of the vehicle characteristics are easily understood, and the content of the characteristic state of each characteristic and the content of the characteristic state of the entirety of the plural characteristics are easily understood. Furthermore, among the characteristic states, at least the currently-selected characteristic state is set in a display state different from the characteristic states of the other icons. For this reason, the currently-selected characteristic state is recognized as a position in the vehicle forward/rearward direction and the vehicle left/right direction. For this reason, the relationship between the currently-selected characteristic state and the characteristic states of the other vehicle characteristics is easily recognized, and the content of the characteristic state of each characteristic and the content of the characteristic state of the entirety of the plural characteristics are easily understood.

In addition to the above, the display unit is provided between the left and right grip sections. The rider sitting on the seat and gripping the grips therefore looks down the display surface of the display unit from above. In this state, the forward/rearward direction is perceived by the rider as the direction along the central axis of his/her body. In the meanwhile, the left/right direction is perceived as the direction connecting the left and right grip portions with each other, i.e., the direction connecting the positions where the respective hands hold the grip portions with each other. In this state, on the display surface of the display unit, the vehicle characteristic icon and the characteristic state icon are lined up in both the vehicle forward/rearward direction and the vehicle left/right direction. For this reason, for the rider sitting on the seat and gripping the grips, one of the directions in which the icons are lined up corresponds to the central axis of the body. Furthermore, for the rider, the other one of the directions in which the icons are lined up is a direction connecting the positions where the respective hands holds the grips with each other, which intersects the central axis of the body. As such, for the rider sitting on the seat and gripping the grips, the icons are lined up in the two directions that refer to the posture of the rider. Because this makes it easy to promptly recognize the layout of the icons, it is possible to promptly recognize the setting state of the vehicle characteristic, which is indicated by the layout of the icons.

Because of the above, on a display unit which is mounted on the saddle type vehicle and has a restricted screen size, the setting state of a controller capable of changing characteristics of the vehicle is changed more easily and more rapidly. It is noted that the icons are stylized simple pictures of objects.

The saddle type vehicle of the present teaching is preferably arranged to further include a related characteristic storage configured to store a related characteristic in which a first vehicle characteristic state which is one of the characteristic states of the first vehicle characteristic is associated with a second vehicle characteristic state which is one of the characteristic states of the second vehicle characteristic, wherein, the related characteristic storage is configured to store at least a first related characteristic and a second related characteristic, one of which is selected in accordance with a content of an operation of the operation unit. More preferably the display unit is configured to display, on the display surface, based on the related characteristic stored in the related characteristic storage, a related characteristic icon indicating the related characteristic, the first related characteristic icon indicating the first related characteristic, and the second related characteristic icon indicating the second related characteristic in an aspect of being lined up in the one of the vehicle forward/rearward direction and the vehicle left/right direction. Even more preferably, the display unit is configured to display, on the display surface, based on the related characteristic stored in the related characteristic storage, the related characteristic icon and the first vehicle characteristic icon to in an aspect of being lined up in the other one of the vehicle forward/rearward direction and the vehicle left/right direction, and the first related characteristic icon, the second related characteristic icon, and the first vehicle characteristic state icons in an aspect of being lined up in the other one of the vehicle forward/rearward direction and the vehicle left/right direction. Further preferably, the display unit is configured to display, on the display surface, based on the related characteristic stored in the related characteristic storage, an icon of at least currently selected related characteristic among the first related characteristic and the second related characteristic icon in an aspect different from aspects of the other icon. Even further preferably, the display unit is configured to display, on the display surface, based on the related characteristic stored in the related characteristic storage, each of the icons of the characteristic states associated with the currently selected related characteristic among the first characteristic state icons and the second characteristic state icons in an aspect different from aspects of the other icons.

According to this arrangement, it is possible to associate the characteristic states of the first vehicle characteristic and the characteristic states of the second vehicle characteristic with at least two related characteristics, respectively. For this reason, by selecting a related characteristic, it is possible to simultaneously select the characteristic states of the first vehicle characteristic and the second vehicle characteristic. Furthermore, the related characteristic icon, the first related characteristic icon, and the second related characteristic icon are also lined up in one of the vehicle forward/rearward direction and the vehicle left/right direction, in the same manner as the vehicle characteristic icon and the vehicle characteristic state icons. The related characteristic icon and the vehicle characteristic icon are lined up in the other one of the vehicle forward/rearward direction and the vehicle left/right direction. Furthermore, the first related characteristic icon, the second related characteristic icon, and the first vehicle characteristic state icons are lined up in the other one of the directions. This makes it easy to recognize the relationship between the related characteristic and the characteristic states of each vehicle characteristic, with reference to the positional relations of the icons. Furthermore, for the rider sitting on the seat and gripping the grips, the layout of the icons including the icons regarding the related characteristic is correctly recognizable. Furthermore, an icon of a currently-selected related characteristic and icons of a characteristic states associated with the currently-selected related characteristic are displayed in display states different from the display states of the other icons. For this reason, it is easy to recognize the currently-selected related characteristic and the characteristic states associated with that related characteristic, as positions in the vehicle forward/rearward direction and the vehicle left/right direction. It is therefore possible to more easily and rapidly change the setting state of the controller capable of changing the characteristics of the vehicle.

The saddle type vehicle of the present teaching is preferably arranged such that, the number of times of an operation of the operation unit required to arrange one of the first related characteristic and the second related characteristic to be selectable after the display unit starts to display the first vehicle characteristic icon, the second vehicle characteristic icon, the first vehicle characteristic state icons, the second vehicle characteristic state icons, the related characteristic icon, the first related characteristic icon, and the second related characteristic icon is smaller than the number of times of an operation of the operation unit required to arrange the first vehicle characteristic or the second vehicle characteristic to be selectable from the characteristic states.

According to this arrangement, because the number of times of the operation required to set the related characteristic to be selectable is relatively small, it is possible to easily realize the state in which the related characteristic is changeable. Because the characteristic states of plural vehicle characteristics are changed at once by changing the related characteristic, the setting state is further easily and rapidly changed when it is easy to establish the state of changing the related characteristic.

The saddle type vehicle of the present teaching is preferably arranged such that, while the display unit is displaying, on the display surface, the first vehicle characteristic icon, the second vehicle characteristic icon, the first vehicle characteristic state icons, the second vehicle characteristic state icons, the related characteristic icon, the first related characteristic icon, and the second related characteristic icon, a state in which one of the first related characteristic and the second related characteristic is selectable and a state in which the first vehicle characteristic or the second vehicle characteristic is selectable from the characteristic states are established.

With this arrangement, it is possible to change the related characteristic and the vehicle characteristic while the icon regarding the related characteristic and the icons regarding the vehicle characteristics and their characteristic states being displayed. This makes it possible to change the related characteristic and the vehicle characteristics while recognizing the relations of the related characteristic, the vehicle characteristics, and the characteristic states. It is therefore possible to further easily and rapidly change the setting state as compared to a case where the characteristics are changeable only after shifting to another screen.

The saddle type vehicle of the present teaching is preferably arranged such that the display surface is substantially rectangular in shape, the one of the vehicle forward/rearward direction and the vehicle left/right direction is in parallel to short sides of the rectangular display surface, and the one one of the vehicle forward/rearward direction and the vehicle left/right direction is in parallel to the long sides of the rectangular display surface.

According to this arrangement, the range of the display surface in the direction in which the vehicle characteristic icons are lined up (the other one of the directions) is wider than the range in the direction in which the vehicle characteristic state icons are lined up (the one of the directions). It is therefore easy to display the icons of the vehicle characteristics simultaneously. Therefore the icons are likely to be provided in one screen even if there are plural vehicle characteristics. Because it is less necessary to perform the operation after shifting to another screen, it is possible to further easily and rapidly change the setting state.

The saddle type vehicle of the present teaching is preferably arranged such that, the operation unit includes a first switch and a second switch which are configured to receive operations with different contents, respectively, when the first switch is operated, the display unit moves a cursor on the display to indicate a line along which the first vehicle characteristic state icons are provided, a line along which the second vehicle characteristic state icons are provided, and a line along which the first related characteristic icon and the second related characteristic icon are provided, when the second switch is operated, a characteristic or a related characteristic corresponding to an icon provided along a line indicated by the cursor becomes selectable, the line being one of the line along which the first vehicle characteristic state icons are provided the line along which the second vehicle characteristic state icons are provided, and the line along which the first related characteristic icon and the second related characteristic icon are provided.

According to this arrangement, it is possible to cause the characteristics and the related characteristic to be selectable by means of the operation unit which simply includes two types of switches. It is therefore possible to further easily and rapidly change the setting state.

### BRIEF DESCRIPTION OF THE DRAWINGS

FIG. 1 is a side view of a motorcycle of a preferred embodiment.
FIG. 2 shows a display surface of a display unit in the direction indicated by the arrow A in FIG. 1.
FIG. 3 is a functional block diagram of the structure of a control system of a motorcycle.
FIG. 4 shows a menu screen which allows the rider to select a setting screen for changing a vehicle characteristic.
FIG. 5 is a drawing viewed in the direction indicated by the arrow A in FIG. 1, showing a state where a vehicle characteristic screen is displayed on the display surface of the display unit.
FIG. 6 shows the vehicle characteristic screen in which a characteristic state icon column regarding a TCS characteristic is displayed in a display aspect different from the display aspect in FIG. 5.
FIG. 7 shows the vehicle characteristic screen in which a cursor has been moved from the location shown in FIG. 5.
FIG. 8 shows the vehicle characteristic screen in which a related characteristic is in a changeable state.
FIG. 9 shows the vehicle characteristic screen in which a PWR characteristic and a TCS characteristic are in a changeable state.
FIG. 10 shows the display surface of the display unit on which a SUS characteristic screen is displayed.
FIG. 11A shows a screen of a known technology, on which a vehicle characteristic change controller for changing a setting state is selected. FIG.11B shows a screen of a known technology, showing how the setting state is changed in each vehicle characteristic change controller.

### DESCRIPTION OF THE PREFERRED EMBODIMENTS

The following will describe a saddle type vehicle of a preferred embodiment, with a motorcycle 1 taken as an example. It is noted that the saddle type vehicle according to the present teaching is not limited to the motorcycle 1. The saddle type vehicle is of any type of vehicles on which an occupant rides. The saddle type vehicle may be a motorcycle of an off-road type, a scooter type, a moped type, or any other types. Examples of the saddle type vehicle of the present teaching encompass tricycles, four-wheeled buggies (ATVs: All Terrain Vehicles), and personal water crafts. In the descriptions below, forward/rearward directions indicate forward and rearward directions from the viewpoint of the rider R sitting on a later-described seat 11 of the motorcycle 1, whereas left/right directions indicate leftward and rightward directions (vehicle width directions) from the viewpoint of the rider R sitting on the seat 11. The directions indicated by arrows F and B indicate forward and rearward directions, respectively. The directions indicated by arrows L and R indicate leftward and rightward directions, respectively.

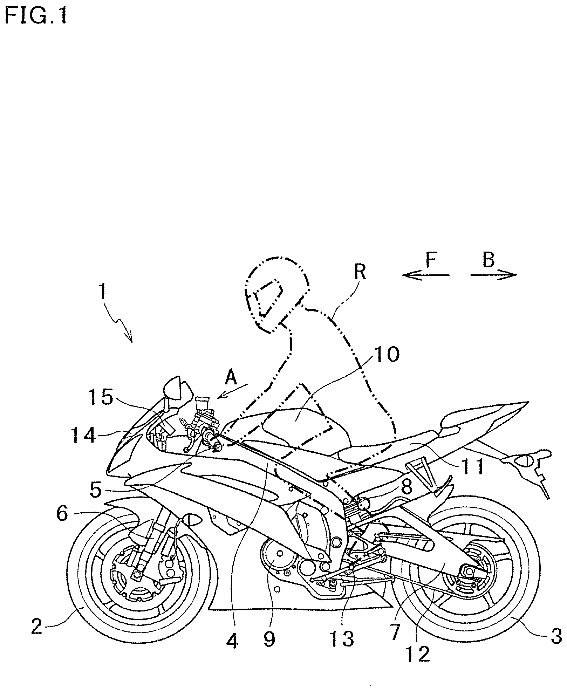

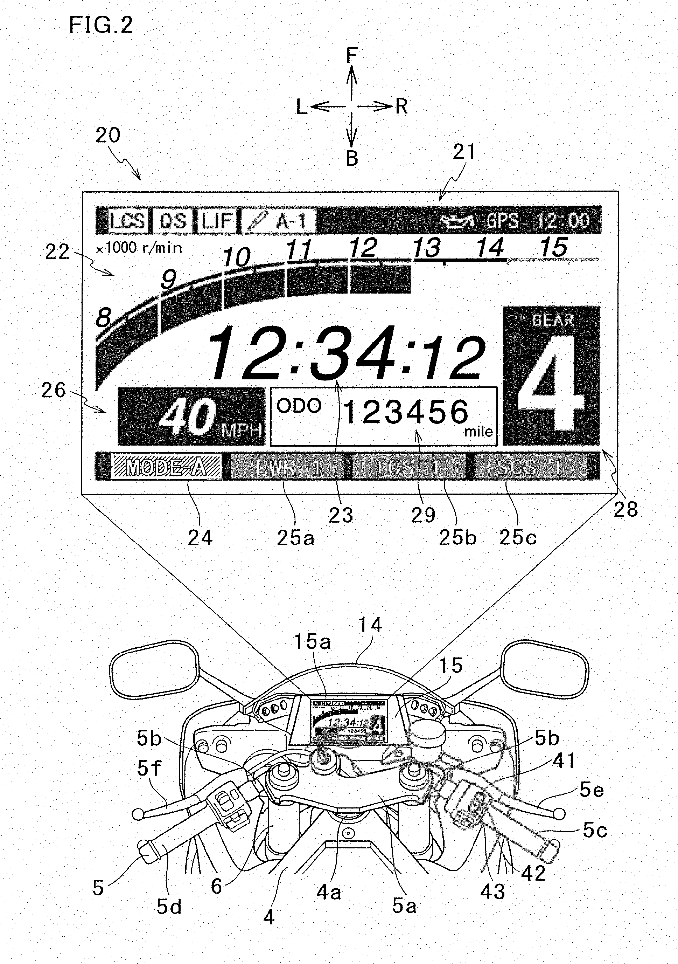

As shown in FIG. 1, the motorcycle 1 is provided with a front wheel 2, a rear wheel 3, a vehicle body frame 4, and a seat 11. The seat 11 is supported by the vehicle body frame 4. As shown in FIG. 2, a head pipe 4a is provided forward of the seat 11 of the vehicle body frame 4. Into the head pipe 4a, a steering shaft (not illustrated) is rotatably inserted. To an upper end of the steering shaft is fixed a handle crown 5a.

To the left and right end portions of the handle crown 5a, upper end portions of the front forks 6 are fixed, respectively. The lower end portions of these front forks 6 support the front wheel 2. To the upper end portions of the two front forks, handlebars 5b are fixed, respectively.

On the peripheral surfaces of the two handlebars 5b, grips 5c and 5d (right grip section and left grip section) are attached, respectively. The right grip 5c is a throttle grip. To the right handlebar 5b is attached a brake lever 5e, whereas to the left handlebar 5b is attached a clutch lever 5f. On the handle crown 5a and the handlebars 5b, plural types of switches are provided. The handlebars 5b and the grips 5c and 5d constitute a handle 5 (steering handle).

In the vicinity of the grip 5c, an upper switch 41, a selection switch 42, and a lower switch 43 are provided. These three switches are supported by the handle 5. These switches are provided to the immediate left of the grip 5c to allow a hand (finger) of the rider R gripping the grip 5c to reach the switches. The rider R is therefore able to operate these switches while gripping the grip 5c. Alternatively, the three switches may be disposed in a range reachable by a hand (finger) of the rider R gripping the grip 5d. Alternatively, at least one of the switches may be provided in the vicinity of the grip 5c whereas the remaining switches may be provided in the vicinity of the grip 5d. For example, the upper switch 41 and the lower switch 43 are provided in the vicinity of the grip 5c whereas the selection switch 42 is provided in the vicinity of the grip 5d. From the far side to the near side in FIG. 2, the three switches are lined up along the circumference of the handle 5 in the order as follows: the upper switch 41, the selection switch 42, and the lower switch 43. As described later, the upper switch 41 is a switch used for performing an upward operation. The lower switch 43 is a switch used for performing a downward operation. The selection switch 42 is a switch used for performing selection, determination, or the like. Hereinafter, these switches may be abbreviated as the switch 41, the switch 42, and the switch 43.

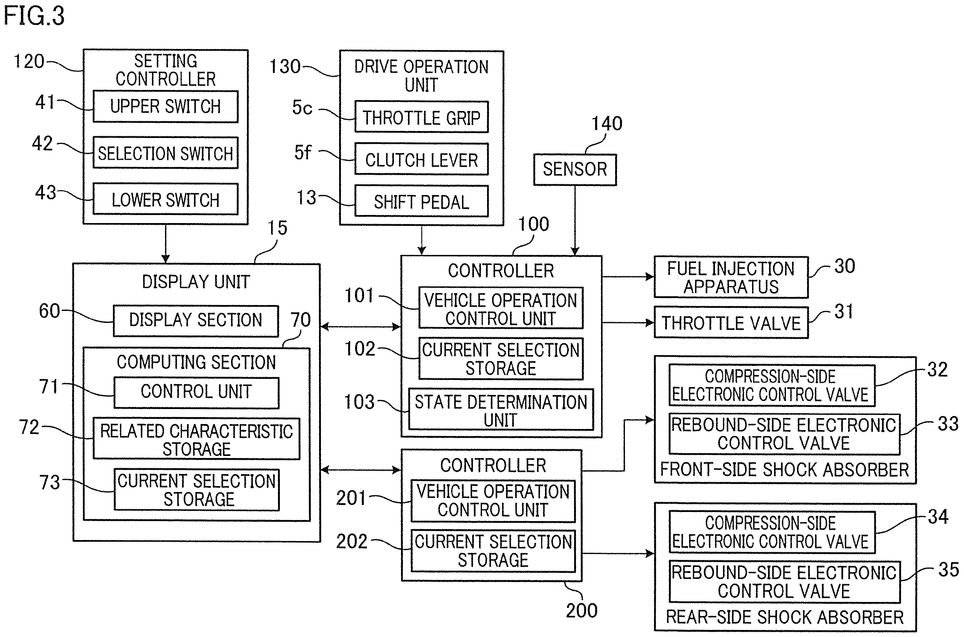

Each of the front forks 6 is provided with a front-side oil-type shock absorber 32 (not illustrated) absorbing vibrations in the up/down directions. In the shock absorber, air may be used in place of the oil. This shock absorber is provided with a compression-side electronic control valve 32 and a rebound-side electronic control valve 33 (see FIG. 3) by which the flow resistance of the hydraulic oil (or air) is adjustable by electronic control. As the flow resistance of the hydraulic oil (or air) is adjusted by controlling the valve, the damping force characteristics of the shock absorber are adjustable. The compression-side electronic control valve 32 is used for adjusting a damping force characteristic on the compression side. The rebound-side electronic control valve 33 is used for adjusting a damping force characteristic on the rebound side.

At a rear portion of the vehicle body frame 4, the front end portion of the swingarm 7 is supported in a swingable manner. The rear end portion of this swingarm 7 supports the rear wheel 3. A part of the swingarm 7 which is different from the swinging center of the swingarm 7 is connected with the vehicle body frame 4 via a rear suspension 8 which is configured to absorb shocks in the up-down directions. The rear suspension 8 is provided with a rear-side shock absorber which is of the same type as the front-side shock absorber. This shock absorber is provided with a compression-side electronic control valve 34 and a rebound-side electronic control valve 35 (see FIG. 3). As the flow resistance of the hydraulic oil (or air) is adjusted by controlling these valves, the damping force characteristics of the rear-side shock absorber are adjustable on the compression side and on the rebound side, respectively.

Furthermore, the vehicle body frame 4 supports a water-cooled engine (power source) 9. This engine 9 may be of an air-cooled type. The vehicle body frame 4 may directly support the engine 9 or indirectly support the engine 9 through another member. Upward of the engine 9 is provided a fuel tank 10. Rearward of the fuel tank 10 is provided the seat 11. Upward of the engine 9 are provided a throttle body and an air cleaner (not illustrated). Into the engine 9, air cleaned by the air cleaner flows through an intake passage in the throttle body. On the intake passage of the throttle body, a throttle valve 31 (see FIG. 3) is provided to change the amount of air flowing in the passage. The throttle body is provided with a fuel injection apparatus 30 (see FIG. 3). The fuel in the fuel tank 10 is injected by the fuel injection apparatus 30. The air introduced through the throttle body is introduced into a combustion chamber in the engine 9, together with the fuel injected from the fuel injection apparatus 30. The output characteristic of the engine 9 is changeable by adjusting an amount of the injected fuel from the fuel injection apparatus 30 and the aperture of the throttle valve 31. The fuel injection apparatus 30 may be provided in the engine 9.

Rearward of the engine 9 is provided a transmission (not illustrated) including multi-stage shift gears. The driving force of the engine 9 is transmitted to the rear wheel 3 via the transmission and the chain 12. To the left of the transmission is provided a shift pedal 13 used for switching the gears of the transmission.

Above the front wheel 2 and forward of the handle 5, a front cowling 14 is provided. Between the front cowling 14 and the handle 5 is disposed a display unit 15. The display unit 15 may be disposed at any position on condition that the position is between the grip 5c and the grip 5d in the left/right direction and forward of the seat 11 in the forward/rearward direction. For example, the display unit 15 may be provided upward of the head pipe 4a. The display unit 15 includes a rectangular display surface 15a having long sides in parallel to the left/right direction and short sides in parallel to the forward/rearward direction. The display unit 15 is disposed to be inclined in the forward/rearward direction and the up-down direction such that the display surface 15a faces rearward and upward. The display unit 15 includes a display section 60 having the display surface 15a and a computing section 70 configured to control display contents on the display section 60 (see FIG. 3). The display section 60 is constituted by a dot matrix display capable of performing color image display, such as a liquid crystal display, a plasma display, and an organic EL display. The computing section 70 executes arithmetic operations of different types based on input signals from the switches 41 to 43. The details of the structure and the processing details of the computing section 70 will be given later.

The display surface 15a of the display section 60 displays information regarding a vehicle characteristic or the like. As the power is supplied to the display unit 15 in response to an operation of a switch, the display surface 15a automatically displays a basic screen in a track mode or a street mode. FIG. 2 shows an example of the basic screen 20 in the track mode. The basic screen 20 in the track mode and the basic screen in the street mode are switched by an operation of a switch.

The basic screen 20 in the track mode includes a vehicle state icon group 21, an engine revolution display 22, a lap time display 23, a related characteristic display 24, characteristic state displays 25a to 25c, a vehicle speed display 26, a gear position display 28, and a travel distance display 29. The vehicle state icon group 21 includes warning icons such as a hydraulic pressure warning icon and icons indicating vehicle states such as a vehicle characteristic icon. A vehicle characteristic icon is an icon indicating the state of a later-described vehicle characteristic. The engine revolution display 22 includes bar display having a length corresponding to a rotation speed. The lap time display 23 indicates a result of measurement of a lap time. The related characteristic display 24 indicates which one of later-described related characteristics A to D is currently selected. The characteristic state displays 25a to 25c show, in numbers, the characteristic states of a power characteristic, a traction control system characteristic, and a slide control system characteristic, which will be described later. The basic screen 20 allows the rider R to change a characteristic state or a related characteristic by operating the switches 41 to 43. This will be described below.

Now, the configuration of the control system of the motorcycle 1 will be described with reference to FIG. 3. The control system of the motorcycle 1 is constituted by members such as a display unit 15, controllers 100 and 200, a setting operation unit 120, a drive operation unit 130, and a sensor 140. These members are electrically connected with one another. The setting operation unit 120 and the drive operation unit 130 receive an operation from the rider R. The setting operation unit 120 is constituted by the above-described switches 41 to 43, and is mainly used for changing the setting of vehicle characteristics. The setting operation unit 120 corresponds to an operation unit of the present teaching. The drive operation unit 130 is constituted by members such as the throttle grip 5c, the clutch lever 5f, and the shift pedal 13 described above, and is mainly used for the driving by the rider R. The sensor 140 includes different types of sensors, such as sensors for detecting the rotation speeds of the front wheel 2 and the rear wheel 3, a sensor for detecting an inclination angle of the vehicle, and a sensor for detecting the lateral acceleration.

Each of the controllers 100 and 200 is composed of hardware such as a CPU (Central Processing Unit), a ROM (Read Only Memory), a RAM (Random Access Memory), an ASIC (Application Specific Integrated Circuit) and software such as program data stored in the ROM and the RAM. The CPU executes information processings corresponding to the contents of operations that the setting operation unit 120 and the drive operation unit 130 receive and detection results of the sensor 140, based on the software such as the program data. The ASIC controls the operations of the members based on a result of the information processing above. In this manner, the following functional parts of the controllers 100 and 200 are realized.

As shown in FIG. 3, the controller 100 includes a vehicle operation control unit 101, a current selection storage 102, and a state determination unit 103. The vehicle operation control unit 101 controls the operations of the components of the vehicle. For example, the vehicle operation control unit 101 controls the output characteristic of the engine 9 by adjusting the amount of injected fuel from the fuel injection apparatus 30 and the aperture of the throttle valve 31. By this control, the vehicle operation control unit 101 controls different types of vehicle characteristics. Examples of the vehicle characteristics to be controlled include a power characteristic, a traction control system characteristic, a slide control system characteristic, a launch control system characteristic, a quick shift system characteristic, and a lift control system characteristic. Each of these vehicle characteristics has plural characteristic states. As described later, these characteristics are changeable as the rider R operates the setting operation unit 120 to select one of plural characteristic states.

The power characteristic is a characteristic regarding the degree of change in the aperture of the throttle with respect to the operation quantity of the throttle grip 5c. The traction control system characteristic is a characteristic regarding the traction control. The traction control is performed to restrain the slipping of the motorcycle 1 based on a difference between the rotation speeds of the front wheel 2 and the rear wheel 3 calculated from detection results of the sensor 140.

The slide control system characteristic is a characteristic regarding slide control performed to restrain the side slipping of the motorcycle 1. This slide control is performed based on the rotation speeds of the front wheel 2 and the rear wheel 3, the inclination angle of the vehicle, the lateral acceleration or the like, which are calculated from results of detections of the sensor 140. The launch control system characteristic is a characteristic regarding launch control. The launch control is performed to smoothly and rapidly start the motorcycle 1 in the stopped state. The quick shift system characteristic is a characteristic regarding quick shift. The quick shift is a control operation with which the shift up is achieved without requiring the operation of the throttle grip 5c and the clutch lever 5d.

The lift control system characteristic is a characteristic regarding lift control. The lift control is a control operation for restraining the lift of the front wheel 2 during the running, based on the rotation speeds of the front wheel 2 and the rear wheel 3, the angle (pitch) in the vehicle forward/rearward direction, or the like, which are calculated from results of detections by the sensor 140.

As described above, plural characteristic states are prepared for each characteristic. For example, each of the power characteristic, the traction control system characteristic, the slide control system characteristic, the launch control system characteristic, the quick shift system characteristic, and the lift control system characteristic has plural states of different levels, as characteristic states. Each of the levels corresponds to the degree of control of each characteristic. For example, the power characteristic is controlled by the vehicle operation control unit 101 in such a way that, the higher the level is, the smaller the output of the engine 9 with respect to a predetermined operation quantity of the throttle grip 5c is. In case of the traction control system characteristic, the characteristic is controlled such that, the higher the level is, the higher the degree of restraint of the slipping is. Except for the power characteristic, an on state and an off state are prepared for the vehicle characteristics. When a characteristic is in the off state, no control is performed by the vehicle operation control unit 101. This off state is one of the characteristic states of each characteristic.

The current selection storage 102 stores currently-selected levels of the power characteristic, the traction control system characteristic, the slide control system characteristic, the launch control system characteristic, the quick shift system characteristic, and the lift control system characteristic. In one setting example (hereinafter, setting example S), the current selection storage 102 stores a level 1 for the power characteristic, a level 2 for the traction control system characteristic, a level 3 for the slide control system characteristic, a level 1 for the launch control system characteristic, a level 1 for the quick shift system characteristic, and a level 1 for the lift control system characteristic.

The vehicle operation control unit 101 controls each vehicle characteristic in accordance with the content stored in the current selection storage 102. When the current selection storage 102 stores the above-described setting example S, the vehicle operation control unit 101 executes control in the level 1 for the power characteristic, control in the level 2 for the traction control system characteristic, control in the level 3 for the slide control system characteristic, control in the level 1 for the launch control system characteristic, control in the level 1 for the quick shift system characteristic, and control in the level 1 for the lift control system characteristic.

As described later, to the controller 100, the content stored in a related characteristic storage 72 of the display unit 15 is regularly sent from the display unit 15. The content sent to the controller 100 is used for updating the content stored in the current selection storage 102 on the controller 100 side. When the content having been sent is different from the content stored in the current selection storage 102 on the controller 100 side, the characteristic state of each vehicle characteristic is changed as the content stored in the current selection storage 102 is updated in line with the content having been sent. The characteristic state stored in the current selection storage 102 includes an important content regarding the control of the vehicle by the vehicle operation control unit 101. For this reason, changing the content of the characteristic state may not always be appropriate. In accordance with the state of the vehicle and/or the rider R, a time preferable to change the content may be limited.

For the reason above, based on a result of detection by the sensor 140, the state determination unit 103 determines whether the characteristic state of a vehicle characteristic is changeable. Whether the characteristic state is changeable is determined based on conditions set in advance. The conditions are set in accordance with the state of the vehicle and/or the rider R, for example, the state of the throttle, the posture of the rider R, whether the vehicle is running or not, and whether the rider R is riding on the vehicle or not. When the state determination unit 103 determines that the characteristic state of a vehicle characteristic is changeable, the controller 100 updates the content stored in the current selection storage 102 in line with the content sent from the display unit 15. When the content sent from the display unit 15 is different from the content stored in the current selection storage 102, the content stored in the current selection storage 102 is changed. In the meanwhile, when the state determination unit 103 determines that the characteristic state of the vehicle characteristic is not changeable, the controller 100 does not update the content stored in the current selection storage 102.

The controller 200 includes a vehicle operation control unit 201 and a current selection storage 202. The vehicle operation control unit 201 controls the suspension characteristic which is one of the vehicle characteristics. The suspension characteristic is a characteristic regarding the control of the front-side shock absorber and the rear-side shock absorber. The vehicle operation control unit 201 controls the compression-side electronic control valves 32 and 34 and the rebound-side electronic control valves 33 and 35 so as to control the damping force characteristics on the compression side and the rebound side of each shock absorber.

The characteristic states of the suspension characteristic are automatic states 1 to 3 and manual states 1 to 3. Elements defining these states are, as described above, the damping force characteristics of the front-side shock absorber on the compression side and the rebound side and the damping force characteristics of the rear-side shock absorber on the compression side and the rebound side, i.e., four damping force characteristics in total. For each damping force characteristic, plural levels are prepared as characteristic states. In each automatic state, a level selected from plural levels is set in advance for each of the four damping force characteristics. In the automatic states 1 to 3, a level is set for each of the four damping force characteristics. The automatic states 1 to 3 are different from one another in the setting content of the level. When one of the automatic states 1 to 3 is selected, the vehicle operation control unit 201 performs control regarding the four damping force characteristics based on the setting content of the selected automatic state. In the manual states 1 to 3, the user is allowed to set the control levels of the four damping force characteristics at will. (How the levels are set will be described later). The vehicle operation control unit 201 controls the compression-side electronic control valve 32 or the like in such a way that, for example, the damping force increases as the level of each damping force characteristic increases. As described later, the suspension characteristic is changeable as the rider R selects one of the characteristic states by operating the setting operation unit 120.

The current selection storage 202 stores the currently-selected characteristic state for the suspension characteristic. In one setting example (hereinafter, setting example T), the current selection storage 202 stores the automatic state 1 for the suspension characteristic. The vehicle operation control unit 201 controls the suspension characteristic based on the content stored in the current selection storage 202. When the current selection storage 202 stores the setting example T, the vehicle operation control unit 201 controls the suspension characteristic based on the automatic state 1.

As described later, to the controller 200, the content stored in a related characteristic storage 72 of the display unit 15 is regularly sent from the display unit 15. The controller 200 updates the content stored in the current selection storage 202 to the content sent from the display unit 15. Therefore, when the content sent from the display unit 15 is different from the content stored in the current selection storage 202, the content stored in the current selection storage 202 is changed to the content sent from the display unit 15.

The controllers 100 and 200 regularly send the contents stored in the current selection storages 102 and 202 to the display unit 15. For example, when the content stored in the current selection storage 102 or 202 is changed to the content sent from the display unit 15, the content after the change is, by the regular sending after the change, sent from the controller 100 or 200 to the display unit 15 in a feedback manner. Based on a detection result by the sensor 140, the controller 100 sends the state of the vehicle and/or the rider R to the display unit 15. As described later, this state is used for the determination as to whether an operation of the setting operation unit 120 is valid or not in the display unit 15.

It is noted that any two of seven vehicle characteristics constituted by the six vehicle characteristics controlled by the vehicle operation control unit 101 and the suspension characteristic controlled by the vehicle operation control unit 201 correspond to a first vehicle characteristic and a second vehicle characteristic of the present teaching. The vehicle operation control units 101 and 201 correspond to a first vehicle characteristic change controller and a second vehicle characteristic change controller of the present teaching, in regard to any two of the seven vehicle characteristics. For example, there is a case where the vehicle operation control unit 101 solely corresponds to the first vehicle characteristic change controller and the second vehicle characteristic change controller of the present teaching for any two of the six characteristics such as the PWR characteristic. In another case, the vehicle operation control unit 101 corresponds to one of the first vehicle characteristic change controller and the second vehicle characteristic change controller of the present teaching for any one of the six characteristics such as the PWR characteristic, whereas the vehicle operation control unit 201 corresponds to the other one of the first vehicle characteristic change controller and the second vehicle characteristic change controller of the present teaching for the SUS characteristic.

The computing section 70 of the display unit 15 is constructed by hardware such as a CPU (Central Processing Unit), a ROM (Read Only Memory), a RAM (Random Access Memory), an ASIC (Application Specific Integrated Circuit) and software such as program data stored in the ROM and the RAM. Based on the software such as the program data, the CPU executes information processings in accordance with the content of an operation received by the setting operation unit 120 or the like. The ASIC controls image display by the display unit 15 based on a result of the information processing. As such, the following functional parts of the computing section.

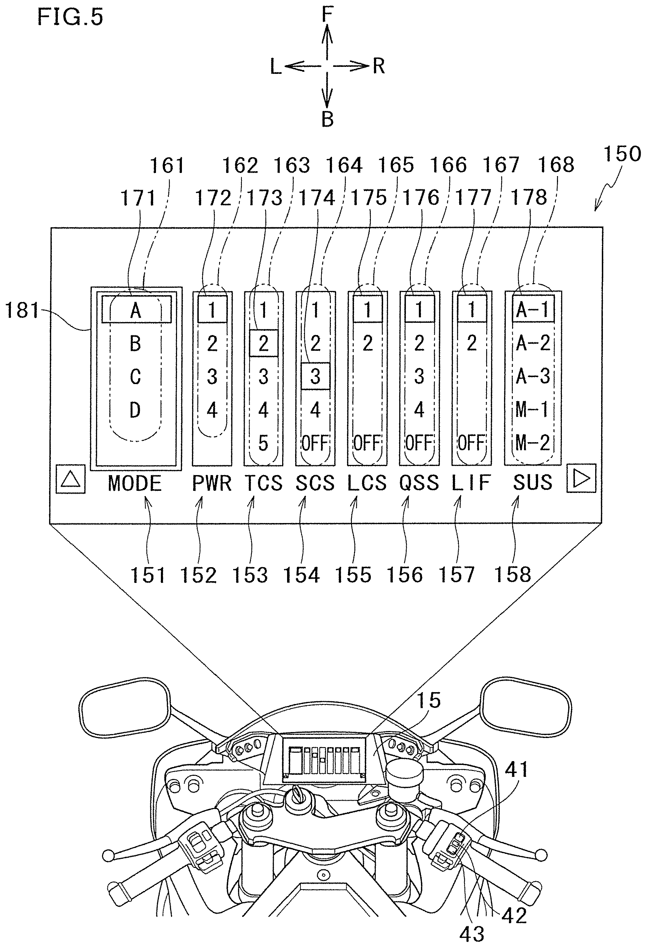

The computing section 70 includes a control unit 71, a related characteristic storage 72, and a current selection storage 73. The related characteristic storage 72 stores one of the characteristic states of the power characteristic, one of the characteristic states of the traction control system characteristic, one of the characteristic states of the slide control system characteristic, one of the characteristic states of the launch control system characteristic, one of the characteristic states of the quick shift system characteristic, and one of the characteristic states of the lift control system characteristic, in association with one another. Regarding the suspension characteristic, the related characteristic storage 72 stores the characteristic states of the four damping force characteristics in association with each of the automatic states 1 to 3 and manual states 1 to 3. For example, according to the setting examples S and T, the level 1 for the power characteristic, the level 2 for the traction control system characteristic, the level 3 for the slide control system characteristic, the level 1 for the launch control system characteristic, the level 1 for the quick shift system characteristic, the level 1 for the lift control system characteristic, and the automatic state 1 for the suspension characteristic are associated with one another as one set of the related characteristic, and these levels are stored in the related characteristic storage 72 (see FIG. 5). In the present embodiment, four sets of the related characteristics, i.e., a related characteristic A, a related characteristic B, a related characteristic C, and a related characteristic D are stored in the related characteristic storage 72.

To these related characteristics, for example, meanings are suitably attached by the rider R based on his/her preference. For example, the attachment of the meanings is done in accordance with the use environments and conditions of the vehicle, such that the related characteristic A is associated with sunny day, the related characteristic B is associated with cloudy day, the related characteristic C is associated with lightly rainy day, and the related characteristic D is associated with heavily rainy day. In the present case, the rider R selects the related characteristic in accordance with the actual use environment and conditions. The current selection storage 73 stores information indicating which one of the related characteristics A to D is currently selected. In accordance with the contents stored in the current selection storages 102 and 202 which are regularly sent from the controllers 100 and 200, the computing section 70 updates the content which is stored in the related characteristic storage 72 in regard to the currently-selected related characteristic stored in the current selection storage 73. Furthermore, the computing section 70 regularly sends, to the controllers 100 and 200, the content stored in the related characteristic storage 72 regarding the currently-selected related characteristic stored in the current selection storage 73. The content having been sent is used for updating the contents stored in the current selection storages 102 and 202 in the controllers 100 and 200. As a result, regarding the related characteristic stored in the current selection storage 73, the characteristic states stored in the related characteristic storage 72 corresponds to the characteristic states stored in the current selection storages 102 and 202 in the controllers 100 and 200.

The control unit 71 selects one of the characteristic states for each of the power characteristic, the traction control system characteristic, the slide control system characteristic, the launch control system characteristic, the quick shift system characteristic, the lift control system characteristic, and the suspension characteristic, and updates the content stored in the related characteristic storage 72 based on the selected content. The control unit 71 selects a characteristic state for each vehicle characteristic, based on the content that the rider R inputs by operating the setting operation unit 120 while seeing the screen displayed on the display unit 15. Based on this selection content, the content stored in the related characteristic storage 72 is updated. The computing section 70 sends the content stored in the related characteristic storage 72 to the controllers 100 and 200 by the above-described regular sending. In the controller 200, the content stored in the current selection storage 202 is updated irrespective of the content sent from the display unit 15. The updated content is sent to the display unit 15 by the regular sending. Based on this content having been sent, the computing section 70 updates the content stored in the related characteristic storage 72.

In the meanwhile, in the controller 100, when the content stored in the related characteristic storage 72 is sent from the display unit 15, the state determination unit 103 again determines whether the characteristic state is changeable. When the state determination unit 103 determines that the characteristic state is changeable, the content stored in the current selection storage 102 of the controller 100 is changed to the content that the computing section 70 has sent to the controller 100. As described above, this changed content is sent from the controller 100 to the display unit 15 in a feedback manner, by the regular sending. The computing section 70 updates the content stored in the related characteristic storage 72 based on the content having been sent in a feedback manner. With this, the state after the change in accordance with the operation of the setting operation unit 120 is reflected to the display unit 15.

In the meanwhile, when the state determination unit 103 determines that the characteristic state is not changeable, the content stored in the current selection storage 102 of the controller 100 is not changed. In this case, by the regular sending, the content which is stored in the current selection storage 102 and to which the change is not reflected is sent from the controller 100 to the display unit 15. The computing section 70 updates the content stored in the related characteristic storage 72 based on the content sent from the controller 100. For this reason, even if the content stored in the related characteristic storage 72 is once changed based on the operation of the setting operation unit 120, the content stored in the related characteristic storage 72 returns to the state before the change, based on the content sent from the controller 100.

The following will detail the processing of the control unit 71 based on the content of an operation of the setting operation unit 120. To begin with, the processing content when the basic screen 20 is operated will be described. In a state in which the basic screen 20 is displayed on the display section 60, the control unit 71 performs control to change a characteristic state actually used in the controller 100 or 200 as below, based on the content of an operation of the setting operation unit 120 by the rider R. When the setting operation unit 120 is operated in the state in which the basic screen 20 is displayed on the display section 60 shown in FIG. 2, the control unit 71 determines whether the operation is valid. This determination is made based on the state of the vehicle and/or the rider sent from the controller 100. As described above, in the controller 100, the state determination unit 103 determines whether the characteristic state of a vehicle characteristic is changeable. Also in the control unit 71, whether the operation of the setting operation unit 120 is valid is determined based on the same determination condition as in the state determination unit 103.

For example, in FIG. 2, the related characteristic display 24 is provided with a white frame. This is a state where the related characteristic is selected as an operation target. When the rider R presses the upper switch 41 or the lower switch 43 in this state, the control unit 71 determines whether this operation is valid. As described above, the operation is determined to be valid when the condition based on which a change of the related characteristic is possible, which is identical with the determination condition of the state determination unit 103, is satisfied. In the meanwhile, the operation is determined to be invalid when the condition based on which a change of the related characteristic is possible is not satisfied. When the operation is invalid, the control unit 71 does not change the related characteristic. In the meanwhile, when the operation is valid, the control unit 71 changes the related characteristic based on the content of the operation of the setting operation unit 120. More specifically, the control unit 71 updates the content stored in the current selection storage 73 to the related characteristic after the change, in accordance with the content of the operation of the setting operation unit 120. As such, among the content stored in the related characteristic storage 72, a characteristic state regarding the related characteristic after the change is sent to the controllers 100 and 200 by the regular sending. The content having been sent is used for updating the contents stored in the current selection storages 102 and 202 in the controllers 100 and 200.

In addition to the above, when the rider R presses the selection switch 42, the control unit 71 moves the white frame from the related characteristic display 24 to serially the characteristic state displays 25a to 25c one by one. When the rider R presses the upper switch 41 or the lower switch 43 while the white frame is at one of the characteristic state displays 25a to 25c, the control unit 71 determines whether this operation is valid. As described above, the operation is determined to be valid when the condition based on which a change of the characteristic state is possible, which is identical with the determination condition of the state determination unit 103, is satisfied. In the meanwhile, the operation is determined to be invalid when the condition based on which a change of the characteristic state is possible is not satisfied. When the operation is invalid, the control unit 71 does not change the characteristic state. In the meanwhile, when the operation is valid, the control unit 71 changes the characteristic state based on the content of the operation of the setting operation unit 120. More specifically, the control unit 71 updates the content stored in the related characteristic storage 72 to the characteristic state after the change, in accordance with the content of the operation of the setting operation unit 120.

As such, when the setting operation unit 120 is operated on the basic screen 20, the content stored in the related characteristic storage 72 is changed once in accordance with the content of the operation, when it is determined that the operation is valid. However, as described above, in the controller 100 the state determination unit 103 again determines whether the characteristic state is changeable. When it is determined in this determination the characteristic state is changeable, the content after the change is sent from the controller 100 to the display unit 15 in a feedback manner. With this, the content of the related characteristic storage 72 is eventually fixed to the content after the change. In the meanwhile, when the state determination unit 103 determines that the characteristic state is not changeable, the content before the change is sent from the controller 100 to the display unit 15. In this case, the content stored in the related characteristic storage 72 eventually returns to the state before the change.

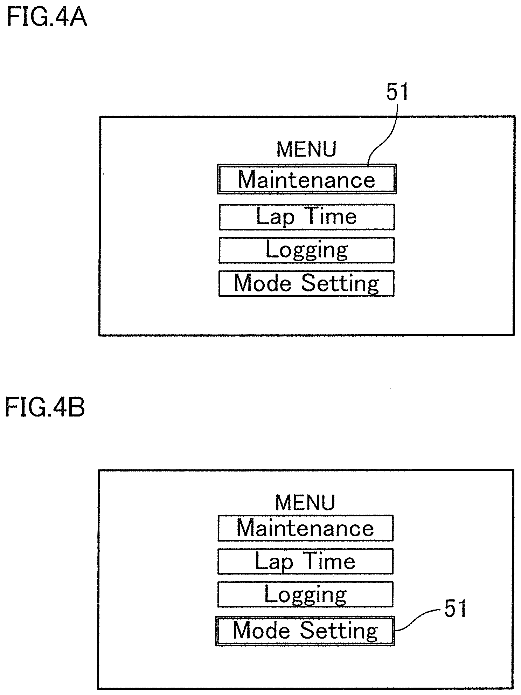

When the vehicle is in the stopped state, if the rider R performs a specific operation with respect to the setting operation unit 120 while the basic screen 20 is being displayed, the control unit 71 switches screen display. It is noted that the control unit 71 determines whether the vehicle is in the stopped state based on the state of the vehicle sent from the controller 100. The control unit 71 then displays a screen shown in FIG. 4A on a display section 60. This screen is a menu screen that allows the rider R to select the setting screen for changing a vehicle characteristic. This menu screen includes menu items including "Mode Setting" for selecting the setting screen for changing a vehicle characteristic. The rider R selects the target "Mode Setting" from the menu items by operating the switch 41 or 43 and moving the cursor 51 as shown in FIG. 4(b), and confirms the selection by the switch 42. In response to this, the control unit 71 displays on the display unit 15 a vehicle characteristic screen 150 shown in FIG. 5, based on the content stored in the related characteristic storage 72. It is noted that the two-dot chain lines in FIG. 5 are not lines actually displayed. A switch for switching the basic screen 20 to the menu screen and for operating the menu screen may be provided in addition to the setting operation unit 120.

The vehicle characteristic screen 150 includes a related characteristic icon 151, characteristic icons 152 to 158, a related characteristic icon column 161, characteristic state icon columns 162 to 168, and frame displays 171 to 178. The following will describe how the control unit 71 displays the icons, the frame displays, and the background displays on the display surface 15a of the display unit 15. In the present embodiment, icons are stylized simple pictures of objects. There are icons indicating levels or the like by numbers, and icons indicating names by simplified character strings.

The related characteristic icon 151 is an icon showing a text "MODE" indicating the related characteristic. The characteristic icons 152 to 158 are icons indicating the names of the vehicle characteristics by simplified character strings. "PWR" indicates the power characteristic, "TCS" indicates the traction control system characteristic, "SCS" indicates the slide control system characteristic, "LCS" indicates the launch control system characteristic, "QSS" indicates the quick shift system characteristic, "LIF" indicates the lift control system characteristic, and "SUS" indicates the suspension characteristic. Hereinafter, these characteristics may be abbreviated as above. The related characteristic icon 151 and the characteristic icons 152 to 158 are linearly lined up along the left/right direction. The icons may be lined up in a curved manner. For example, the icons are lined up to form a wavy line along the left/right direction. Any two of the characteristic icons 152 to 158 correspond to a first vehicle characteristic icon and a second vehicle characteristic icon of the present teaching.

The related characteristic icon column 161 includes four icons "A", "B", "C", and "D" which indicate the related characteristics A to D by simplified character strings. Any two of these four icons correspond to a first related characteristic icon and a second related characteristic icon of the present teaching. The characteristic state icon columns 162 to 168 include characteristic state icons each indicating the level of each characteristic by a number. For example, the four icons "1", "2", "3", and "4" in the characteristic state icon column 162 are icons indicating the levels 1 to 4 which are the characteristic states of the PWR characteristic. Each of the characteristic state icon columns 163 to 167 includes an icon "OFF" which indicates the off state which is one of the characteristic states by a simplified character string.

The related characteristic icon column 161 and the characteristic state icon columns 162 to 168 are arranged such that the characteristic state icons in each column are linearly lined up in the forward/rearward direction. The characteristic state icons included in the related characteristic icon column 161 are linearly lined up in the forward/rearward direction together with the related characteristic icon 151.. The characteristic state icons included in the characteristic state icon column 162 are linearly lined up in the forward/rearward direction together with the characteristic icon 152. Similarly, in the characteristic state icon columns 163 to 168, the characteristic state icons in each icon column are linearly lined up in the forward/rearward direction together with each of the characteristic icons 153 to 158. The icons may be lined up in a curved manner. For example, the icons may be lined up to form a wavy line along the forward/rearward direction. In each icon column, five icons at the maximum are displayed at regular intervals within a single screen. The icon columns are identical in length in the forward/rearward direction and are provided at the same positions in the forward/rearward direction. The distance between neighboring icons in the forward/rearward direction is identical among the icon columns.

In the related characteristic icon column 161, the icon "A" is on the forwardmost, and the other icons "B", "C", and "D" are provided rearward of the icon "A" in this order. Among the characteristic state icon columns 162 to 168, in the characteristic state icon columns 162 and 164 to 167, the icons "1" each of which indicates the lowest level are provided at the same forwardmost positions in the forward/rearward direction. The icons indicating the other levels are provided rearward of the icons "1" in the order of "2", "3", and so on. The icon "OFF" is provided at the position equivalent to the fifth icon from the forwardmost icon. Among the icon columns, in an icon column in which the number of the levels is less than five (e.g., the characteristic state icon column 165), a blank space is formed between an icon indicating a level and the icon "OFF".

Among the characteristic state icon columns 162 to 168, the characteristic state icon column 163 includes icons "1" to "9" indicating the levels and the icon "OFF" indicating the off state, and therefore the entirety of the column cannot be displayed in one screen. In the example shown in FIG. 5, the forwardmost icon "1" is provided at the same position as the icons "1" of the other icon columns in the forward/rearward direction, and the icons "2" to "5" are lined up rearward of the icon "1" in the forward/rearward direction. In the meanwhile, because the maximum number of icons displayable in one screen is five, the icons "6" to "9" and the icon "OFF" are not displayed in this state. For this reason, the image display may be switched to display the icon "6" and the icon "OFF" (as described later). The characteristic state icon column 168 includes icons "A-1" to "A-3" indicating the automatic states and icons "M-1" to "M-3" indicating the manual states. In the same manner as the characteristic state icon column 163, the entirety of the characteristic state icon column 168 cannot be displayed in one screen. In the example shown in FIG. 5, the forwardmost icon "A-1" is provided at the same position as the icons "1" of the other icon columns in the forward/rearward direction, and the icons "A-2" to "M-2" are lined up rearward of the icon "A-1" in the forward/rearward direction. The icon "M-3", however, is not displayed. For this reason, the image display may be switched to display the icon "6" and the icon "OFF" (as described later).

The icons included in the related characteristic icon column 161 and the icons included in the respective characteristic state icon columns 162 to 168 are linearly lined up along the left/right direction. For example, in the state shown in FIG. 5, the icon "A" in the related characteristic icon column 161 and the icons "1" and "A-1" in the characteristic state icon columns 162 to 168 are linearly lined up in the left/right direction. The icon "B" in the related characteristic icon column 161 and the icons "2" and "A-2" in the characteristic state icon columns 162 to 168 are linearly lined up in the left/right direction. Furthermore, in the characteristic state icon columns 162 to 168, the characteristic state icons in the respective icon columns are linearly lined up in the left/right direction, too. For example, in the state shown in FIG. 5, the icons "1" and "A-1" in the characteristic state icon columns 162 to 168 are linearly lined up in the left/right direction. Furthermore, the icons "2" and "A-2" in the characteristic state icon columns 162 to 168 are linearly lined up in the left/right direction. It is noted that the icons may be lined up in a curved manner in the left/right direction. For example, the icons may be lined up to form a wavy line along the left/right direction.

The frame display 171 indicates which one of the related characteristics is currently selected as an operation target. In the screen shown in FIG. 5, the frame display 171 is displayed at a position surrounding the icon "A" in the related characteristic icon column 161. This indicates that the related characteristic currently selected as the operation target is the related characteristic A. That is to say, the aspect of the icon "A" where the frame display 171 is provided is different from the aspect of the icons "B" to "D" where the frame display 171 is not provided. As such, the related characteristic currently selected as the operation target is displayed as the related characteristic A.

The frame displays 172 to 178 display which characteristic states are associated with the related characteristic currently selected as the operation target. More specifically, for the respective characteristics, the frame displays 172 to 178 are provided to each surround one of the characteristic state icons. That is to say, the aspects of the characteristic state icons where the frame displays 172 to 178 are provided are different from the aspect of a characteristic state icon where no frame display is provided. As such, which characteristic state is associated with the related characteristic selected as the operation target for each characteristic is displayed.

For example, in the example shown in FIG. 5, the frame display 172 causes the icon "1" in the PWR characteristic to be in a display aspect different from those of the other characteristic state icons. Furthermore, the frame display 173 causes the icon "2" in the TCS characteristic to be in a display aspect different from those of the other characteristic state icons. As such, these frame displays display that the level 1 is associated with the related characteristic A in the PWR characteristic and the level 2 is associated with the related characteristic A in the TCS characteristic.

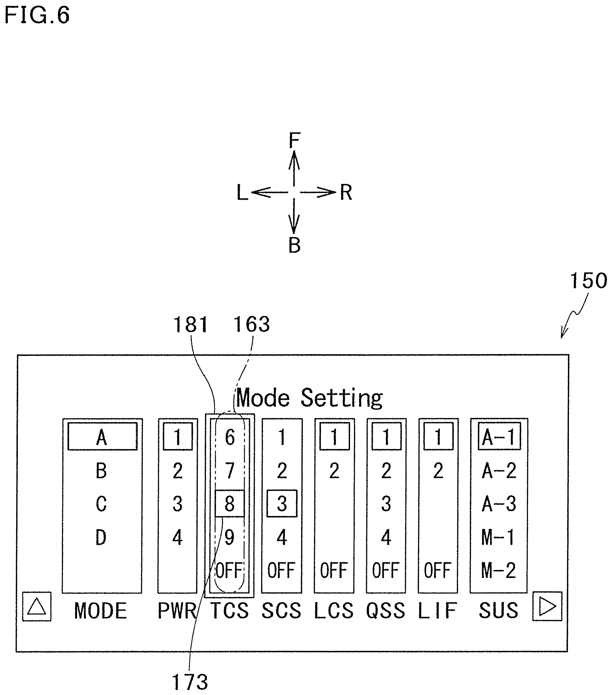

When one of the icons "6" to "9" and the icon "OFF" is displayed as the characteristic state in the TCS characteristic, the frame display 173 is displayed after the aspect of the characteristic state icon column 163 is changed to a aspect different from the state in FIG. 5 in which the icons "1" to "5" are displayed. For example, the aspect of the characteristic state icon column 163 is switched to the state in which the icons "6" to "9" and the icon "OFF" are displayed as shown in FIG. 6, and the frame display 173 is provided at the icon "8". The same applies to the characteristic state icon column 168.

As shown in FIG. 5, the control unit 71 displays the cursor 181 in the vehicle characteristic screen 150. This allows the rider R to move this cursor 181 by operating the setting operation unit 120. With this, the rider R selects an item as a target of change. When the screen display of the display unit 15 is switched from the basic screen 20 to the vehicle characteristic screen 150, the control unit 71 first provides the cursor 181 to a position surrounding the related characteristic icon column 161 (i.e., at the position shown in FIG. 5).

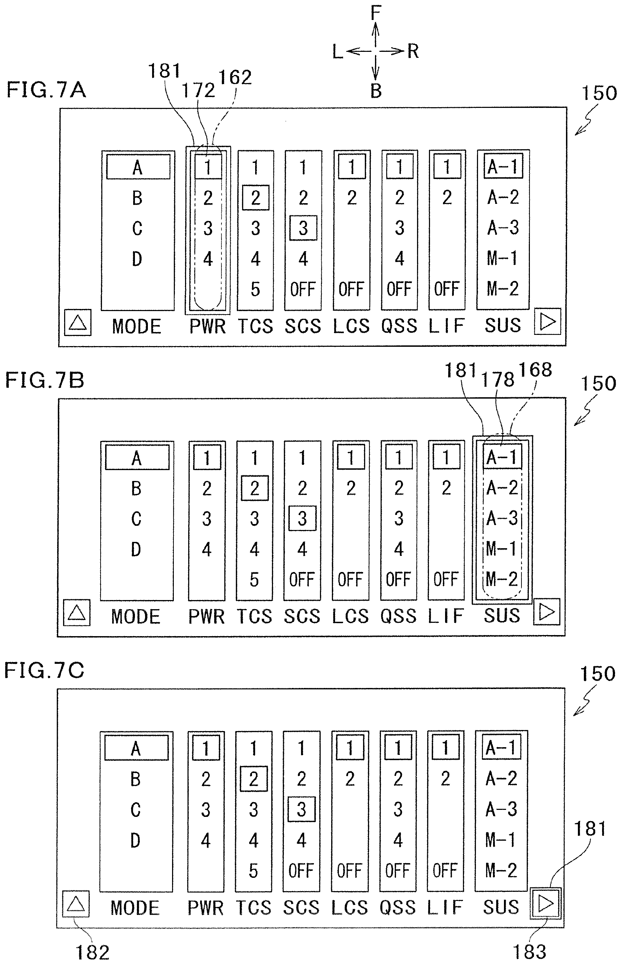

As the rider R presses the switch 43 once in the state shown in FIG. 5, the control unit 71 moves the cursor 181 to a position surrounding the characteristic state icon column 162 to the right of the related characteristic icon column 161, as shown in FIG. 7A. As such, each time the switch 43 is pressed once, the control unit 71 moves the cursor 181 to the characteristic state icon column to the immediate right.

Furthermore, when the cursor 181 is at the characteristic state icon column 168 as shown in FIG. 7B, as the switch 43 is pressed once, the control unit 71 moves the cursor 181 to a rightward arrow display 183 as shown in FIG. 7C. As the rider R continues to press the switch 41, the cursor 181 moves in the direction opposite to the case of the pressing of the switch 43. It is noted that, when the switch 43 is further pressed once while the cursor 181 is at the rightward arrow display 183, the control unit 71 may move the cursor 181 to an upward arrow display 182. In short, the cursor 181 may be arranged to move in a circulating manner.

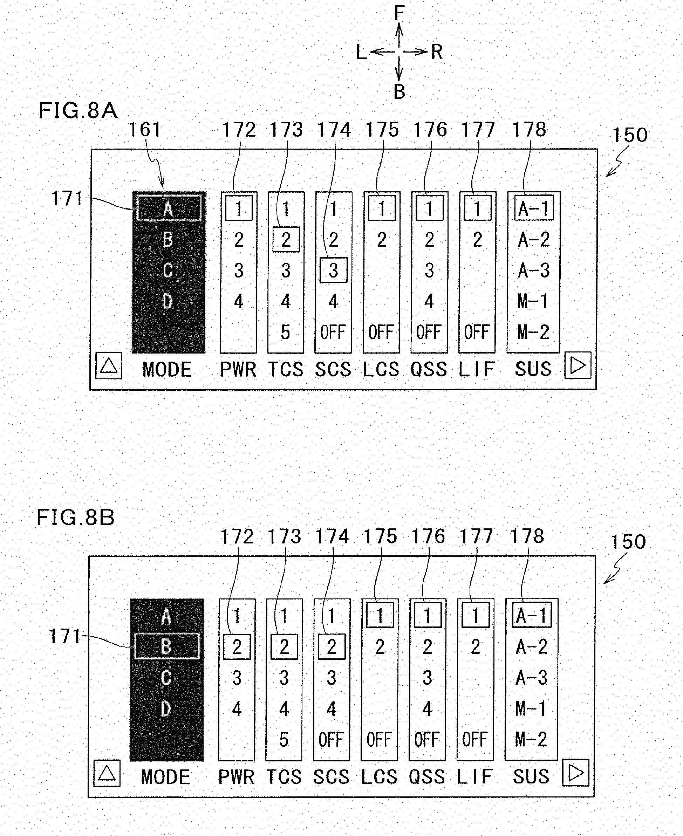

When the rider R presses the switch 42 while the cursor 181 is at the related characteristic icon column 161, the control unit 71 inverts the black and white of the related characteristic icon column 161, the background thereof, and the frame display 171, as shown in FIG. 8A. This state is a state in which one of the related characteristics A to D is selectable. In this state, the frame display 171 is movable from the currently-selected related characteristic as described below. For example, each time the rider R presses the switch 43 once, the control unit 71 moves the frame display 171 rearward by one level. In the meanwhile, when the rider R presses the switch 41, the control unit 71 moves the frame display 171 in the opposite direction (i.e., forward) as compared to the case of the pressing of the switch 43. In this regard, the control unit 71 moves the frame displays 172 to 178 to the characteristic state icons corresponding to the characteristic states associated with the related characteristic where the frame display 171 is provided, in accordance with the content stored in the related characteristic storage 72.

As an example, FIG. 8B shows a state in which the frame display 171 has been moved to the "B" which is rearward of the "A" icon by one level. As a result, the control unit 71 moves the frame displays 172 to 178 from the positions corresponding to the related characteristic A to the positions corresponding to the related characteristic B.

When the rider R presses the switch 42 in the state shown in FIG. 8A or FIG. 8B, the control unit 71 returns the inversed black and white of the background of the related characteristic icon column 161 or the like to the original ones. Simultaneously, the related characteristic corresponding to the position of the frame display 171 is selected as the operation target. On this account, the content stored in the current selection storage 73 is not changed even if the related characteristic selected as the operation target is changed. As such, the related characteristic which is the target of operation on the vehicle characteristic screen 150 may or may not be identical with the content stored in the current selection storage 73.

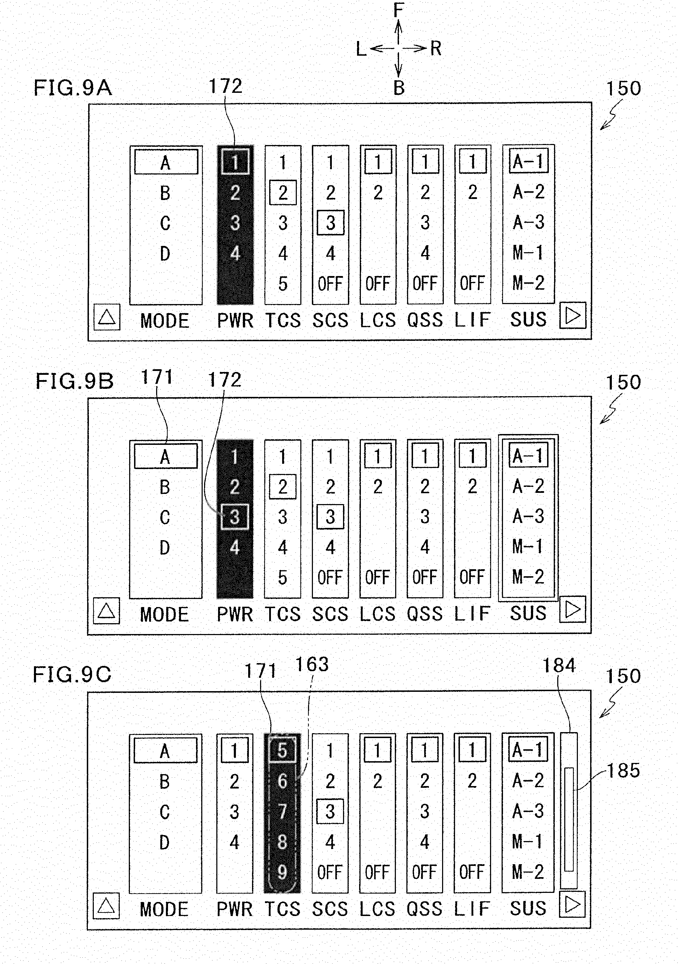

Now, operations of the setting operation unit 120 and the content of control by the control unit 71 when the PWR characteristic, the TCS characteristic or the like is changed on the vehicle characteristic screen 150 will be described. For example, as shown in FIG. 7A, when the rider R presses the switch 42 while the cursor 181 is at the PWR characteristic in the left/right direction, the control unit 71 inverts the black and white of the characteristic state icon column 162, the background thereof, and the frame display 172, as shown in FIG. 9A. This state is a state in which one of the characteristic states is selectable for the PWR characteristic.

When the rider R presses the switch 41 or the switch 43 in this state, the control unit 71 moves the frame display 172 in the forward/rearward direction in accordance with the content of the operation of the switch 41 or 43. For example, FIG. 9B shows a state in which the frame display 172 has been moved rearward by two levels as compared to the state shown in FIG. 9A.

When the rider R presses the switch 42, the control unit 71 returns the black and white of background of the characteristic state icon column 162 or the like to the original ones. Simultaneously, the control unit 71 updates the characteristic state stored in the related characteristic storage 72 in association with the related characteristic indicated by the frame display 171 to the characteristic state indicated by the frame display 172. For example, in the state shown in FIG. 9B, the frame display 171 is at the icon "A" whereas the frame display 172 is at the icon "3". Therefore, when the switch 42 is pressed in this state, the related characteristic storage 72 stores the level 3 as the characteristic state of the PWR characteristic, in association with the related characteristic A.

The operation of the setting operation unit 120 and the content of control by the control unit 71 when the characteristic state is changed for a characteristic other than the PWR characteristic are not described here because they are basically identical with those in the case of the PWR characteristic already described above. In the meanwhile, the TCS characteristic and the SUS characteristic will be described below because the operations and the content of control are partially different from the above. As described above, in the TCS characteristic, it is not possible to display the characteristic state icons in one screen. For this reason, the state shown in FIG. 5 and the state shown in FIG. 6 are switched therebetween. For example, when the switch 42 is pressed in the state of FIG. 6, the black and white of the characteristic state icon column 163, the background thereof, and the frame display 173 are inversed from the state shown in FIG. 6. When the switch 41 or 43 is pressed in this state, the frame display 173 moves in the forward/rearward direction. When the switch 41 is pressed while the frame display 173 is provided at the forwardmost icon (the icon "6" in FIG. 6), the image display of the characteristic state icon column 163 is scrolled rearward by one step as shown in FIG. 9C. On the contrary, when the switch 43 is pressed while the frame display 173 is provided at the rearmost icon, the image display of the characteristic state icon column 163 is scrolled by one step forward when it is possible to display an icon on the rear side. As such, the state of FIG. 5 and the state of FIG. 6 are switched by scrolling the display content forward or rearward.

It is noted that, to indicate that the display content can be scrolled forward or rearward as described above, a scroll bar is displayed in the vehicle characteristic screen 150. For example, in FIG. 9C, a frame 184 indicating the entire range of the scroll and a bar 185 indicating the current display range within the entire range of the scroll by the length and position in the forward/rearward direction of the bar with respect to the frame 184 are displayed. The frame 184 and the bar 185 are displayed only when the characteristic state of a characteristic in which the display content is scrollable, e.g., the TCS characteristic and the SUS characteristic of the present embodiment, is changed.

Also in regard to the SUS characteristic, the icons "A-1" to "A-3" and "M-1" to "M-3" are scrollable when the characteristic state is changed. This arrangement will not be described because it is identical with the arrangement in case of the TCS characteristic. In addition to the above, the SUS characteristic is provided with four damping force characteristics as described above. These four damping force characteristics are changeable in regard to each of the automatic states 1 to 3 and manual states 1 to 3, as described later.

As described above, when the content stored in the related characteristic storage 72 is changed once in accordance with the content of an operation of the setting operation unit 120 on the vehicle characteristic screen 150, the content of the change is sent to the controllers 100 and 200 by the regular sending. In the controller 200, the content stored in the current selection storage 202 is updated based on the content sent from the display unit 15 by the regular sending. The updated content is sent to the display unit 15 by the regular sending, in a feedback manner. As a result, the content stored in the related characteristic storage 72 is fixed to the content after the change.

In the meanwhile, in the controller 100, the state determination unit 103 again determines whether the characteristic state is changeable as described above. When it is determined that the characteristic state is changeable in this determination, the content after the change is sent from the controller 100 to the display unit 15 in a feedback manner. With this, the content stored in the related characteristic storage 72 is finally fixed to the content after the change. In the meanwhile, when it is determined by the state determination unit 103 that the characteristic state is not changeable, the content before the change is sent from the controller 100 to the display unit 15. In this case, the content stored in the related characteristic storage 72 eventually returns to the state before the change.

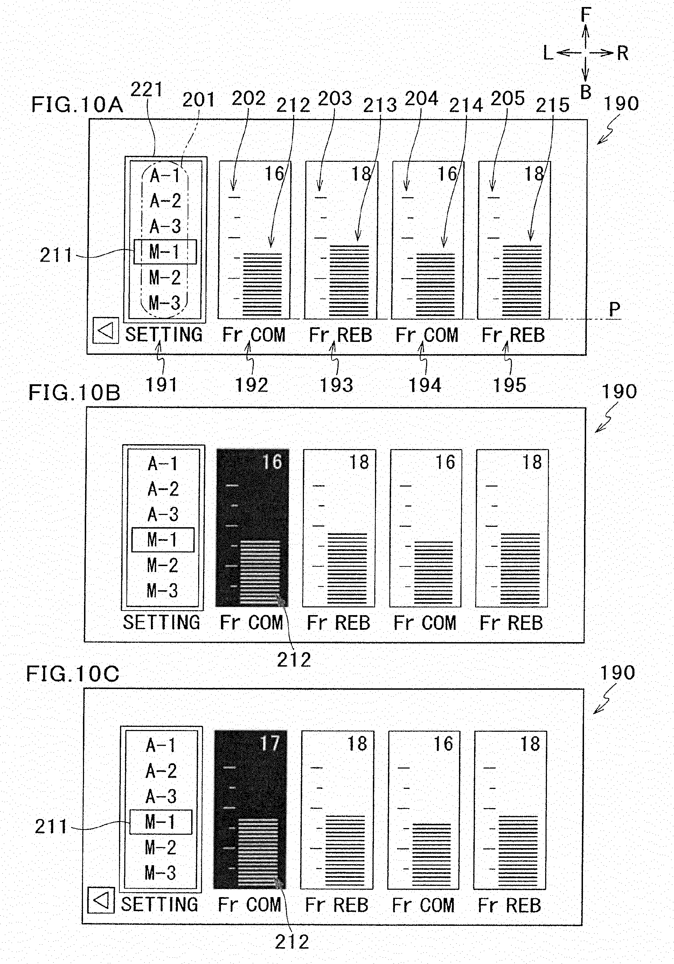

When the rider R presses the switch 42 in the state shown in FIG. 7C in which the cursor 181 is provided at the rightward arrow display 183, the control unit 71 displays a SUS characteristic screen 190 shown in FIG. 10A on the display unit 15. The SUS characteristic screen 190 shows the characteristic states regarding the four damping force characteristics of the SUS characteristic. It is noted that the two-dot chain lines in FIG. 10 are not actually displayed.

The SUS characteristic screen 190 includes a SUS characteristic icon 191, damping force characteristic icons 192 to 194, a SUS state icon column 201, scale displays 202 to 205, a frame display 211, and level bar displays 212 to 215. The following will describe how these icons or the like are displayed.

The SUS characteristic icon 191 is an icon showing a text "SETTING" which indicates that the setting relates to the SUS characteristic. The damping force characteristic icons 192 to 194 are icons indicating the names of the four damping force characteristics by simplified character strings. "Fr COM" indicates the compression side of the front-side shock absorber, "Fr REB" indicates the rebound side of the front-side shock absorber, "Rr COM" indicates the compression side of the rear-side shock absorber, and "Rr REB" indicates the rebound side of the rear-side shock absorber, each in a simplified manner. These icons are linearly lined up in the left/right direction. The icons may be lined up in a curved manner. For example, the icons may be lined up to form a wavy line along the left/right direction.

The SUS state icon column 201 includes icons "A-1" to "A-3" and "M-1" to "M-3" which correspond to the automatic states 1 to 3 and the manual states 1 to 3, respectively. These icons are linearly lined up in the forward/rearward direction. The icons may be lined up in a curved manner. For example, the icons are lined up to form a wavy line along the forward/rearward direction. The frame display 211 is provided at an icon corresponding to the currently-selected automatic state or manual state, among the icons "A-1" to "A-3" and "M-1" to "M-3". In the example of FIG. 10, the manual state 1 corresponding to the icon "M-1" is selected.

The scale displays 202 to 205 include scales each of which indicates the characteristic state of a damping force characteristic. The graduations are provided at regular intervals in the forward/rearward direction, and are marked every five levels from the reference position P shown in FIG. 10A which indicates the minimum level.

Each of the level bar displays 212 to 215 indicates the level of a damping force characteristic associated with the currently-selected automatic state or manual state. More specifically, each of the level bar displays 212 to 215 linearly extends forward from the reference position P to have a length corresponding to the level of each damping force characteristic. The level bar displays 212 to 215 are provided to the immediate right of the scale displays 202 to 205, respectively. The front end of each level bar display is provided at a position corresponding to the level of each damping force characteristic with respect to each of the scale displays 202 to 205. Between the automatic states 1 to 3 and the manual states 1 to 3, the adjustable range of the levels and the number of the levels may be different.

In addition to the level bar displays 212 to 215, the currently-selected characteristic state may be displayed. In the example shown in FIG. 10A, numbers such as "16", "18", "16", and "18" indicating the levels selected in the respective damping force characteristics are displayed forward of the level bar displays 212 to 215.

The SUS characteristic screen 190 includes a cursor 221. By operating the setting operation unit 120, the rider R is able to move this cursor 221. Using the cursor 221, the rider R selects an item as the target of change. In so doing, each time the switch 41 or 43 is operated, the cursor 221 moves right or left by one stage, and is positioned to surround one of the SUS state icon column 201 and the level bar displays 212 to 215. For example, in FIG. 10A, the cursor 221 is provided to surround the SUS state icon column 201. When the rider R presses the switch 42 while the cursor 221 is provided to surround one of the SUS state icon column 201 and the level bar displays 212 to 215, the control unit 71 inverts the black and white of the area surrounded by the cursor 221. With this, the automatic state, the manual state, or the damping force characteristic corresponding to the area becomes changeable.

The content of the operation for changing the automatic state or the manual state, the changes in the display content in response to the operation, and the content of the processing by the control unit 71 are identical with those in the above-described case of changing the related characteristics A to D. Therefore they will not be detailed here. It is noted that, when one of the automatic states 1 to 3 and the manual states 1 to 3 is changed, the level bar displays 212 to 215 are immediately changed in accordance with the characteristic states associated with the state after the change. In the meanwhile, the scale displays 202 to 205, the damping force characteristic icons 192 to 195, or the like, which are different from the level bar displays 212 to 215, are not changed. This allows the rider R to instantly recognize differences in characteristics between the states, by comparing the automatic states 1 to 3 or the manual states 1 to 3 with one another in terms of the entire shape of the level bar displays 212 to 215.

The following will describe an example of an operation to change each damping force characteristic and control by the control unit 71. FIG. 10B shows a state in which, among the four damping force characteristics, the damping force characteristic of the compression side of the front-side shock absorber is changeable. In this state, each time the rider R presses the switch 41 once, the control unit 71 updates the image display and the numerical display of the level bar display 212 such that the level which is higher than the currently-selected level by one is indicated. FIG. 10C shows a state in which the level 17 which is higher than the level 16 in FIG. 10B by one is displayed. In the meanwhile, when the rider R presses the switch 43, on the contrary to the case of the switch 41, the control unit 71 updates the image display such that the level which is lower than the currently-selected level by one is indicated.

Thereafter, when the rider R presses the switch 42, the control unit 71 returns the inverted state to the original state. At the same time, the control unit 71 updates the characteristic states stored in the related characteristic storage 72 in association with the automatic state or the manual state indicated by the frame display 211 to the characteristic states indicated by the level bar displays 212 to 215. For example, when the switch 42 is pressed in the state of FIG. 10C, the characteristic state of the damping force characteristic on the compression side of the front-side shock absorber, which is stored in the related characteristic storage 72 in association with the manual state 1, is updated to 17.

As described above, once the content stored in the related characteristic storage 72 is changed in accordance with the content of the operation of the setting operation unit 120 on the SUS characteristic screen 190, the content of the change is sent to the controller 200 by the regular sending. In the controller 200, the content stored in the current selection storage 202 is updated based on the content sent from the display unit 15 by the regular sending. The updated content is sent to the display unit 15 by the regular sending, in a feedback manner. With this, the content stored in the related characteristic storage 72 is fixed to the content after the change.

According to the present embodiment described above, even in the display unit 15 of the motorcycle 1 which is restricted in the size of the screen, the setting state of plural vehicle characteristics is more easily and rapidly changeable. The reason of this will be described below. In the present embodiment, for each of the vehicle characteristics such as the PWR characteristic, characteristic state icon is displayed to be lined up in the forward/rearward direction with the characteristic icons 152 to 158. Furthermore, the characteristic icons 152 to 158 are displayed to be lined up in the left/right direction. Furthermore, in each of the characteristic state icon columns 162 to 168, the characteristic state icon in each icon column is displayed to form a line with the characteristic state icons of the other icon columns, in the left/right direction. With this, it is possible to understand the content of each characteristic state by recognizing, in one line corresponding to one characteristic state icon column, where the characteristic state icon corresponding to each characteristic state is positioned on the line. Furthermore, it is possible to understand the content of each characteristic state by recognizing the position of the characteristic state icon corresponding to each characteristic state in one characteristic state icon column with respect to the characteristic state icons of the other characteristic state icon columns. On this account, even if there are plural changeable vehicle characteristics, it is easy to understand the relations of the characteristics, and it is easy to understand both the content of the characteristic state of each characteristics and the content of the characteristic state of the entirety of the plural characteristics.

For example, as shown in FIG. 5, which characteristic state is associated with the related characteristic A in the PWR characteristic is understood at a glance from the position of the frame display 172 in the characteristic state icon column 162. The same applies to the other vehicle characteristics. Furthermore, as shown in FIG. 5, because the frame display 173 is rearward of the frame display 172 by one level, it is possible to understand at a glance that the TCS characteristic associated with the related characteristic A is higher than the PWR characteristic by one level, from the relative positions of the frame displays. When, for example, the PWR characteristic associated with the related characteristic A is changed, it is easy in the state before the change (e.g., the state shown in FIG. 9A) to imagine the state after the change (e.g., the state shown in FIG.9B) because it is possible to recognize the position of the frame display 172 in the characteristic state icon column 162 and the relative position of the frame display 172 with respect to the frame display 173 in the neighboring TCS characteristic. Furthermore, because the frame displays 172 to 178 collectively form a particular shape, it is possible to understand at a glance the characteristic states of the respective related characteristics A to D as the collective shape of the frame displays. For this reason, by, for example, comparing FIG. 8A with FIG. 8B, it is possible to recognize at a glance the overall difference between the related characteristic A and the related characteristic B as the overall difference between the collective shapes of the frame displays.

In addition to the above, the display unit 15 is provided between the grip 5c and the grip 5d. The rider R sitting on the seat 11 and gripping the grips 5c and 5d therefore looks down the screen of the display unit 15 from above. In this state, the forward/rearward direction is perceived by the rider R as the direction along the central axis of his/her body. In the meanwhile, the left/right direction is perceived as the direction connecting the grip 5c and the grip 5d with each other, i.e., the direction connecting the positions where the respective hands hold the grips with each other. In this state, on the display surface 15a of the display unit 15, for example, the characteristic icons 152 to 158 and the characteristic state icons included in the characteristic state icon columns 162 to 168 are lined up in the forward/rearward direction and the left/right direction. For this reason, for the rider R sitting on the seat 11 and gripping the grips 5c and 5d, one of the directions in which the icons are lined up corresponds to the central axis of his/her body. Furthermore, for the rider R, the other one of the directions in which the icons are lined up is a direction connecting the positions where the respective hands holds the grips with each other, which intersects the central axis of the body. As such, for the rider R sitting on the seat 11 and gripping the grips 5c and 5d, the icons are lined up in the two directions that refer to the posture of the rider R. Because this makes it easy to correctly recognize the layout of the icons, it is possible to correctly recognize the setting state of the vehicle characteristics, which is indicated by the layout of the icons.

Because of the above, in the display unit 15 of the motorcycle 1 which is restricted in the screen size, it is possible to easily and rapidly change the setting state of vehicle characteristics. It is noted that, in the present embodiment, the setting state of vehicle characteristics is displayed by positions of the frame displays 172 to 178. This makes it possible to graphically recognize the setting state. In particular, in a saddle type vehicle such as the motorcycle 1, the display space on the display surface 15a of the display unit 15 is limited. For this reason, when the number of selectable characteristic states (number of levels) is large, the numbers on the characteristic state icons tend to be small. In this regard, in the present embodiment, as described above, because the setting state can be recognized by the positions of the frame displays 172 to 178, it is easy to recognize the setting state even if the numbers on the characteristic state icons are small. The present embodiment therefore makes it less difficult to recognize the setting state of the vehicle characteristics, even if the number of selectable characteristic states is large in a saddle type vehicle which tends to be limited in the display space.

In addition to the above, in the present embodiment, the characteristic states of each vehicle characteristic are associated with the related characteristics A to D. It is therefore possible to simultaneously select the characteristic states of plural vehicle characteristics by selecting a related characteristic. Furthermore, the related characteristic icon 151 and the related characteristic icon column 161 are lined up in the forward/rearward direction in one vehicle characteristic screen 150, and are lined up in the left/right direction with the characteristic icons 152 to 158 and the characteristic state icons in the characteristic state icon columns 162 to 168. This makes it easy to recognize the relations between each of the related characteristics A to D and the characteristic states of each vehicle characteristic, by the positional relations of the icons. Furthermore, for the rider sitting on the seat and gripping the grips, the layout of the icons including the icons regarding the related characteristic is promptly recognizable. This makes it possible to further easily and rapidly change the setting state of the controller which is capable of changing the characteristics of the vehicle.

Furthermore, as described above, when the image display of the vehicle characteristic screen 150 starts, the cursor 181 is provided on the related characteristic icon column 161. With this, the number of times of the operation of the setting operation unit 120 until the related characteristic icon column 161 is selected and the related characteristic becomes changeable is smaller than the number of times of the operation of the setting operation unit 120 until the cursor 181 is moved to the characteristic state icon columns 162 to 168 and a characteristic such as the power characteristic becomes changeable. According to this arrangement, because the number of times of the operation required to set the related characteristic to be selectable is relatively small, it is possible to easily realize the state in which the related characteristic is changeable. It is possible to change the characteristic states of plural vehicle characteristics at once, by changing the related characteristic.

Furthermore, as described above, it is possible to change the related characteristic and the vehicle characteristics while keeping the related characteristic icon 151, the related characteristic icon column 161, the characteristic icons 152 to 158, and the characteristic state icon columns 162 to 168 to be displayed in one vehicle characteristic screen 150. For this reason, it is possible to change the related characteristic and the vehicle characteristics while checking the mutual relations of the related characteristic, the vehicle characteristics, and the characteristic states, without shifting to a state of displaying another screen.

Furthermore, as described above, the characteristic icons 152 to 158 are lined up in the left/right direction whereas the characteristic state icons in the characteristic state icon columns 162 to 168 are lined up in the forward/rearward direction. In this connection, the display surface 15a of the display unit 15 is long in the left/right direction. Therefore the range of the display surface 15a is wide in the direction in which the characteristic icons 152 to 158 are lined up, as compared to the range in the direction in which the characteristic state icons are lined up. It is therefore easy to provide the characteristic icons 152 to 158 in one screen. For this reason, it is less necessary to perform the operation after shifting to another screen.

How the inventors of the subject application reached the arrangements described above will be described below. The inventors of the subject application noticed the following point, when they researched a controller capable of changing characteristics of a saddle type vehicle and a display unit for the saddle type vehicle. That is to say, when the number of changeable levels is large on a display screen for changing the setting state of a vehicle characteristic change controller, it becomes difficult to change the vehicle characteristics. For example, to change a vehicle characteristic, to begin with, using an operation unit, a vehicle characteristic change controller which is the target of change is selected from vehicle characteristic change controllers displayed on a display screen of a display unit. The display screen is switched to a screen for changing the setting state of the selected vehicle characteristic change controller, and at which level the setting state is currently set is recognized from the text. Then the characters on the button are read and the level of the setting is selected and determined. In the known cases, even if the characters are enlarged for easy reading in some cases, the setting state must be recognized from the text and hence the recognition is not easy and the setting is not easily changed. Furthermore, to change the setting state of another vehicle characteristic change controller, it is necessary to display the screen displaying plural vehicle characteristic change controllers again, select and determine again a vehicle characteristic change controller to be changed, and to change the setting state. As such, the number of times of the operation of the operation unit is large.

In consideration of the above, the inventors of the subject application conceived of a method of recognizing the setting state not by texts but by relative positions, in order to restrain the enlargement of the display unit and to improve the speed of changing the setting state, i.e., to improve the speed of recognition and operation. In regard to the saddle type vehicle which is the target of this case, the inventors conceived of lining up icons indicating setting states of vehicle characteristic change controllers, with the focus on the point that plural control means each independently capable of changing a characteristic of a vehicle are provided. In so doing, the icons indicating the setting states of the vehicle characteristic change controllers are arranged to be lined up to form a single line, and the icons at the ends of the range of the lined-up icons and the icon at an intermediate part of the range are arranged to neighbor with one another. This makes it possible to easily and rapidly recognize the setting state by checking plural relative positions including the relative position of the icon on the one line and the relative position of the icon to the icons indicating the setting state of another vehicle characteristic change controller on the other line displayed along with the one line. More specifically, when the setting state of the first vehicle characteristic change controller is changed, to begin with, the current setting state is checked. In so doing the setting state of the first vehicle characteristic change controller is promptly understood by recognizing the relative position of the icon on the one line and the relative position of the icon to the icons indicating the setting state of the second vehicle characteristic change controller on the other line displayed along with the one line. When the setting state is changed, the relative positions of the icons indicating the setting state on the line are changed before and after the change, with the result that the rider can easily imagine, before the change, the state after changing the setting state. Then the operation is actually conducted, and the positional relation between the icons indicating the setting state on the line and the icons indicating the setting state of the neighboring second vehicle characteristic change controller is changed. Because the rider can easily recognize whether the relative positions are identical with those imagined in advance, it is possible to perform the change easily and rapidly. It is noted that each line may be arranged to be in any directions such as the vehicle forward/rearward direction, the vehicle left/right direction, and a direction inclined to these directions, on condition that plural lines are successfully lined up. Furthermore, each line may be linear or curved.

Furthermore, the icons indicating the setting states of the respective vehicle characteristic change controllers are displayed to be lined up. For this reason, being different from the known cases where a screen for changing the setting state is prepared for each vehicle characteristic change controller, it is unnecessary to return to the screen displaying plural vehicle characteristic change controllers, after the setting state is changed. Because the icons indicating the setting states of plural vehicle characteristic change controllers are displayed to be lined up in one screen, the setting state of another vehicle characteristic change controller can be changed by operating the operation unit once, and hence the setting state is rapidly changeable.

### [Modifications]

The preferred embodiment has been described as above. Furthermore, below-described modifications can be suitably combined with one another and implemented. It is noted that the term "preferable" is non-exclusive in the present specification and indicates "preferable but not limited to".

The following will describe modifications of the embodiment above. In the embodiment above, in the vehicle characteristic screen 150 the display state of the characteristic state icon corresponding to the characteristic state associated with the currently-selected related characteristic is arranged to be different from the display states of the other characteristic state icons, by the frame displays 171 to 178. Alternatively, by means of another display aspect, the display state of the characteristic state icon corresponding to the characteristic state associated with the currently-selected related characteristic may be arranged to be different from the display states of the other characteristic state icons. For example, an arrow or the like may be displayed in the vicinity of the characteristic state icon corresponding to the characteristic state associated with the currently-selected related characteristic. Alternatively, the color of that characteristic state icon may be arranged to be different from the colors of the other characteristic state icons. Furthermore, the background of that characteristic state icon may be arranged to be different from the backgrounds of the other characteristic state icons.

In the embodiment above, in the SUS characteristic screen 190, the levels of the respective damping force characteristics associated with the currently-selected manual state are indicated by the level bar displays 212 to 215. Alternatively, by means of a display aspect different from the level bar displays 212 to 215, the levels of the respective damping force characteristics may be indicated. For example, arrows indicating the positions corresponding to the levels of the damping force characteristics may be displayed for the scale displays 202 to 205.

In the embodiment above, the icons are represented by character strings each expressing an item corresponding to the icon in a simplified form, a number indicating the level, or the like. The icons, however, may be represented in different ways. For example, the icons may be represented by figures, other signs, and illustrations, instead of the numbers and texts.

In the embodiment above, the state in which the related characteristic or the vehicle characteristic is changeable is represented by inverting the black and white of the related characteristic icon column 161, the characteristic state icon column 162, or the like and the background thereof. In this regard, the state in which the related characteristic or the vehicle characteristic is changeable may be represented by a method different from the black and white inversion. For example, the state may be expressed by changing only the color of an icon or only the background color of an icon. Furthermore, the state in which the related characteristic or the vehicle characteristic is changeable may be expressed by displaying a figure, a sign, or the like. Instead of the inversion of the black and white, the color inversion of other two colors may be employed.

In addition to the above, the order of the related characteristic icon 151 and the characteristic icons 152 to 158 in the embodiment above may be changed. For example, the related characteristic icon 151 may be provided at the center or at the rightmost in the left/right direction. Furthermore, the forward/rearward direction and the left/right direction with respect to the direction in which the icons are lined up may be reversed as compared to the embodiment above. For example, while the related characteristic icon 151 and the characteristic icons 152 to 158 may be lined up in the forward/rearward direction, the related characteristic icon column 161 and the characteristic state icon columns 162 to 168 may be lined up in the left/right direction.

While in the embodiment above the handle 5 is a separate handle, the handle of the present teaching may be a one-piece handlebar. The separate handle is a handle arranged such that handlebars are connected to front forks without the intermediary of a handle crown. The one-piece handlebar is a handle arranged such that a handlebar is directly connected to a handle crown.

Furthermore, in the embodiment above, the setting content is changed in accordance with an operation of the setting operation unit 120 on the vehicle characteristic screen 150 and the SUS characteristic screen 190. Alternatively, a switch for changing the setting content on the vehicle characteristic screen 150 and the SUS characteristic screen 190 may be provided in addition to the setting operation unit 120.

## Claims

1. A saddle type vehicle comprising:
a vehicle body frame (4) supporting a power source;
a seat (11) mounted on the vehicle body frame (4);
a steering handle (5) provided forward of the seat (11);
a right grip section (5c, 5e) and a left grip section (5d, 5f) which are provided at a right end portion and a left end portion of the steering handle (5) in a vehicle left/right direction, respectively;
a display unit (15) which is provided forward of the seat (11) in a vehicle forward/rearward direction and between the right grip section (5c, 5e) and the left grip section (5d, 5f) in the vehicle left/right direction, and includes a display surface (15a);
an operation unit (41 to 43,120) which is supported by the steering handle (5), is configured to be operable by a hand gripping at least one of the right grip section (5c, 5e) and the left grip section (5d, 5f), and is electrically connected to the display unit (15); and the saddle type vehicle being **characterized in that** it further comprises: a vehicle characteristic change controller (101, 201) which is configured to be capable of changing, by selecting one of characteristic states, a first vehicle characteristic and a second vehicle characteristic which are different from each other, in accordance with a content of an operation of the operation unit (41 to 43,120),
the display unit (15) is configured to display, on the display surface (15a),
a first vehicle characteristic icon (152 to 158) indicating the first vehicle characteristic and first vehicle characteristic state icons (1 to 9,A-1 to A-3,M-1 to M-3) indicating the characteristic states of the first vehicle characteristic in an aspect of being lined up in one of the vehicle forward/rearward direction and the vehicle left/right direction,
a second vehicle characteristic icon (152 to 158) indicating the second vehicle characteristic and second vehicle characteristic state icons (1 to 9,A-1 to A-3,M-1 to M-3) indicating the characteristic states of the second vehicle characteristic in an aspect of being lined up in the one of the vehicle forward/rearward direction and the vehicle left/right direction, the first vehicle characteristic icon (152 to 158) and the second vehicle characteristic icon (152 to 158) in an aspect of being lined up in the other one of the vehicle forward/rearward direction and the vehicle left/right direction, and the first vehicle characteristic state icons (1 to 9,A-1 to A-3,M-1 to M-3) and the second vehicle characteristic state icons (1 to 9,A-1 to A-3,M-1 to M-3) in an aspect of being lined up in the other one of the vehicle forward/rearward direction and the vehicle left/right direction, at least an icon corresponding to a currently selected characteristic state among the first vehicle characteristic state icons (1 to 9,A-1 to A-3,M-1 to M-3) and the second vehicle characteristic state icons (1 to 9,A-1 to A-3,M-1 to M-3) in an aspect different from aspects of the other icons.

2. A saddle type vehicle according to claim 1, further comprising a related characteristic storage (72) configured to store a related characteristic in which a first vehicle characteristic state which is one of the characteristic states of the first vehicle characteristic is associated with a second vehicle characteristic state which is one of the characteristic states of the second vehicle characteristic, wherein,
the related characteristic storage (72) is configured to store at least a first related characteristic and a second related characteristic, one of which is selected in accordance with a content of an operation of the operation unit (41 to 43,120).

3. A saddle type vehicle according to claim 2, wherein the display unit (15) is configured to display, on the display surface (15a),
based on the related characteristic stored in the related characteristic storage (72), a related characteristic icon (151) indicating the related characteristic, the first related characteristic icon (A to D) indicating the first related characteristic, and the second related characteristic icon (A to D) indicating the second related characteristic in an aspect of being lined up in the one of the vehicle forward/rearward direction and the vehicle left/right direction.

4. A saddle type vehicle according to claim 3, wherein the display unit (15) is configured to display, on the display surface (15a),
based on the related characteristic stored in the related characteristic storage (72), the related characteristic icon (151) and the first vehicle characteristic icon (152 to 158) in an aspect of being lined up in the other one of the vehicle forward/rearward direction and the vehicle left/right direction, and the first related characteristic icon (A to D), the second related characteristic icon (A to D), and the first vehicle characteristic state icons (1 to 9,A-1 to A-3,M-1 to M-3) in an aspect of being lined up in the other one of the vehicle forward/rearward direction and the vehicle left/right direction.

5. A saddle type vehicle according to claim 3 or 4, wherein the display unit (15) is configured to display, on the display surface (15a),
based on the related characteristic stored in the related characteristic storage (72), an icon of at least a currently selected related characteristic among the first related characteristic and the second related characteristic in an aspect different from aspects of the other icons.

6. A saddle type vehicle according to any one of claims 3 to 5, wherein the display unit (15) is configured to display, on the display surface (15a),
based on the related characteristic stored in the related characteristic storage (72), each of the icons of the characteristic states associated with the currently selected related characteristic among the first characteristic state icons and the second characteristic state icons in an aspect different from aspects of the other icons.

7. A saddle type vehicle according to any one of claims 3 to 6, wherein, the number of times of an operation of the operation unit (41 to 43,120) required to arrange one of the first related characteristic and the second related characteristic to be selectable after the display unit (15) starts to display the first vehicle characteristic icon (152 to 158), the second vehicle characteristic icon (152 to 158), the first vehicle characteristic state icons (1 to 9,A-1 to A-3,M-1 to M-3), the second vehicle characteristic state icons (1 to 9,A-1 to A-3,M-1 to M-3), the related characteristic icon (151), the first related characteristic icon (A to D), and the second related characteristic icon (A to D) is smaller than the number of times of an operation of the operation unit (41 to 43,120) required to arrange the first vehicle characteristic or the second vehicle characteristic to be selectable from the characteristic states.

8. A saddle type vehicle according to any one of claims 3 to 7, wherein, while the display unit (15) is displaying, on the display surface (15a), the first vehicle characteristic icon (152 to 158), the second vehicle characteristic icon (152 to 158), the first vehicle characteristic state icons (1 to 9,A-1 to A-3,M-1 to M-3), the second vehicle characteristic state icons (1 to 9,A-1 to A-3,M-1 to M-3), the related characteristic icon (151), the first related characteristic icon (A to D), and the second related characteristic icon (A to D), a state in which one of the first related characteristic and the second related characteristic is selectable and a state in which the first vehicle characteristic or the second vehicle characteristic is selectable from the characteristic states are established.

9. A saddle type vehicle according to any one of claims 1 to 8, wherein, the display surface (15a) is substantially rectangular in shape, the one of the vehicle forward/rearward direction and the vehicle left/right direction is in parallel to short sides of the rectangular display surface (15a), and the one of the vehicle forward/rearward direction and the vehicle left/right direction is in parallel to the long sides of the rectangular display surface (15a).

10. A saddle type vehicle according to any one of claims 3 to 7, wherein, the operation unit (41 to 43,120) includes a first switch (41) and a second switch (42) which are configured to receive operations with different contents, respectively,
when the first switch (41) is operated, the display unit (15) is configured to moves a cursor on the display to indicate a line along which the first vehicle characteristic state icons (1 to 9,A-1 to A-3,M-1 to M-3) are provided, a line along which the second vehicle characteristic state icons (1 to 9,A-1 to A-3,M-1 to M-3) are provided, and a line along which the first related characteristic icon (A to D) and the second related characteristic icon (A to D) are provided,
when the second switch (42) is operated, a characteristic or a related characteristic corresponding to an icon provided along a line indicated by the cursor becomes selectable, the line being one of the line along which the first vehicle characteristic state icons (1 to 9,A-1 to A-3,M-1 to M-3) are provided, the line along which the second vehicle characteristic state icons (1 to 9,A-1 to A-3,M-1 to M-3) are provided, and the line along which the first related characteristic icon (A to D) and the second related characteristic icon (A to D) are provided.

## Patentansprüche

1. Ein Sattel-Typ-Fahrzeug das umfasst:
einen Fahrzeug-Körper-Rahmen (4), der eine Leistungs-Quelle lagert;
einen Sitz (11), der an dem Fahrzeug-Körper-Rahmen (4) montiert ist;
eine Lenk-Stange (5), die vor dem Sitz (11) vorgesehen ist;
ein rechter Griff-Abschnitt (5c, 5e) und ein linker Griff-Abschnitt (5d, 5f), die jeweils an einem rechten Endabschnitt und einem linken Endabschnitt der Lenk-Stange (5), in einer Fahrzeug Links-/Rechts-Richtung vorgesehen sind;
eine Anzeige-Einheit (15), die vor dem Sitz (11) in einer Fahrzeug Vorwärts-/Rückwärts-Richtung und zwischen dem rechten Griff-Abschnitt (5c, 5e) und dem linken Griff-Abschnitt (5d, 5f) in der Fahrzeug Links-/Rechts-Richtung vorgesehen ist, und eine Anzeige-Fläche (15a) beinhaltet;
eine Betätigungs-Einheit (41 bis 43, 120), die an der Lenk-Stange (5) gelagert ist, ist konfiguriert um durch eine Hand die zumindest einen von dem rechten Griff-Abschnitt (5c, 5e) und dem linken Griff-Abschnitt (5d, 5f) greift, betätigt zu werden, und ist elektrisch mit der Anzeige-Einheit (15) verbunden;
und das Sattel-Typ-Fahrzeug ist **dadurch gekennzeichnet, dass** es weiter umfasst:
eine Fahrzeug-Charakteristik-Änderungs-Steuerung (101, 201), die konfiguriert ist um in der Lage zu sein, durch Auswählen von einem Charakteristik-Zustand, eine erste Fahrzeug-Charakteristik und eine zweite Fahrzeug-Charakteristik, die unterschiedlich zueinander sind, in Übereinstimmung mit einem Umfang einer Betätigung der Betätigungs-Einheit (41 bis 43, 120) zu ändern,
die Anzeige-Einheit (15) ist konfiguriert, um anzuzeigen, auf der Anzeige-Fläche (15a), eine erste Fahrzeug-Charakteristik-Abbildung (152 bis 158), welche die erste Fahrzeug-Charakteristik anzeigt, und erste Fahrzeug-Charakteristik-Zustands-Abbildungen (1 bis 9, A-1 bis A-3, M-1 bis M-3), die Charakteristik-Zustände von der ersten Fahrzeug-Charakteristik in einem Aspekt anzeigen, in dem sie aufgereiht sind in einer von der Fahrzeug-Vorwärts-/Rückwärts-Richtung und der Fahrzeug-Links-/Rechts-Richtung,
eine zweite Fahrzeug-Charakteristik-Abbildung (152 bis 158), die eine zweite Fahrzeug-Charakteristik anzeigt, und zweite Fahrzeug-Charakteristik-Zustands-Abbildungen (1 bis 9, A-1 bis A-3, M-1 bis M-3), die Charakteristik-Zustände von der zweiten Fahrzeug-Charakteristik anzeigen, in einem Aspekt in dem sie aufgereiht sind in einer von der Fahrzeug-Vorwärts-/Rückwärts-Richtung und der Fahrzeug-Links-/Rechts-Richtung, die erste Fahrzeug-Charakteristik-Abbildung (152 bis 158) und die zweite Fahrzeug-Charakteristik-Abbildung (152 bis 158), in einem Aspekt aufgereiht in der anderen von der Fahrzeug-Vorwärts-/Rückwärts-Richtung und der Fahrzeug-Links-/Rechts-Richtung, die erste Fahrzeug-Charakteristik-Zustands-Abbildungen (1 bis 9, A-1 bis A3, M-1 bisM-3) und die zweiten Fahrzeug-Charakteristik-Zustands-Abbildungen (1 bis 9, A-1 bis A3, M-1 bis M-3) in einem Aspekt, aufgereiht in der anderen von der Fahrzeug-Vorwärts-/Rückwärts-Richtung und der Fahrzeug-Links-/Rechts-Richtung, zumindest eine Abbildung entsprechend zu einem momentanen ausgewählten Charakteristik-Zustand von den ersten Fahrzeug-Charakteristik-Zustands-Abbildungen (1 bis 9, A-1 bis A-3, M-1 bis M-3) und den zweiten Fahrzeug-Charakteristik-Zustands-Abbildungen (1 bis 9, A-1 bis A-3, M-1 bis M-3), in einem Aspekt, unterschiedlich von den Aspekten von den anderen Abbildungen.

2. Ein Sattel-Typ-Fahrzeug gemäß Anspruch 1 das weiter umfasst einen zugehörigen Charakteristik-Speicher (72), der konfiguriert ist eine zugehörige Charakteristik zu speichern, in welcher ein erster Fahrzeug-Charakteristik-Zustand, der einer von den Charakteristik-Zuständen von der ersten Fahrzeug-Charakteristik ist, in Zuordnung mit einem zweiten Fahrzeug-Charakteristik-Zustand, der einer von den Charakteristik-Zuständen von der zweiten Fahrzeug-Charakteristik ist, zu speichern wobei der zugehörige Charakteristik-Speicher (72) konfiguriert ist, um zumindest eine erste zugehörige Charakteristik und eine zweite zugehörige Charakteristik zu speichern, eine von diesen ist in Übereinstimmung mit einem Umfang von einer Betätigung der Betätigungs-Einheit (41 bis 43, 120) ausgewählt.

3. Ein Sattel-Typ-Fahrzeug gemäß Anspruch 2, wobei die Anzeige-Einheit (15) konfiguriert ist um an der Anzeige-Fläche (15a) anzuzeigen,
aufgrund der zugehörigen Charakteristik, gespeichert in dem zugehörigen Charakteristik-Speicher (72), ein zugehörigendes Charakteristik-Abbild (151), welches die zugehörige Charakteristik anzeigt, das erste zugehörige Charakteristik-Abbild (A bis D), welches die erste zugehörige Charakteristik anzeigt, und das zweite zugehörige Charakteristik-Abbild (A bis D), welches die zweite zugehörige Charakteristik anzeigt, in einem Aspekt in dem es aufgereiht ist in einer von der Fahrzeug-Vorwärts-/Rückwärts-Richtung und der Fahrzeug-Links-/Rechts-Richtung.

4. Ein Sattel-Typ-Fahrzeug gemäß Anspruch 3, wobei die Anzeige-Einheit (15) konfiguriert ist um auf der Anzeige-Fläche (15a) anzuzeigen,
aufgrund der zugehörigen Charakteristik, gespeichert in dem zugehörigen Charakteristik-Speicher (72), die zugehörige Charakteristik-Abbildung (151) und die erste Fahrzeug-Charakteristik-Abbildung (152 bis 158), in einem Aspekt, aufgereiht in der anderen von der Fahrzeug-Vorwärts-/Rückwärts-Richtung und der Fahrzeug-Links-/Rechts-Richtung, und die erste zugehörige Charakteristik-Abbildung (A bis D), die zweite zugehörige Charakteristik-Abbildung (A bis D), und die ersten Fahrzeug-Charakteristik-Zustands-Abbildungen (1 bis 9, A-1 bis A-3, M-1 bis M-3), in einem Aspekt, aufgereiht in der anderen von der Fahrzeug-Vorwärts-/Rückwärts-Richtung und der Fahrzeug-Links-/Rechts-Richtung.

5. Ein Sattel-Typ-Fahrzeug gemäß Anspruch 3 oder 4, wobei die Anzeige-Einheit (15) konfiguriert ist um an der Anzeige-Fläche (15a) anzuzeigen,
aufgrund der zugehörigen Charakteristik, gespeichert in den zugehörigen Charakteristik-Speicher (72), eine Abbildung von zumindest einer momentan ausgewählten zugehörigen Charakteristik, von der ersten zugehörigen Charakteristik und der zweiten zugehörigen Charakteristik, in einem Aspekt, unterschiedlich von dem Aspekt von den anderen Abbildungen.

6. Ein Sattel-Typ-Fahrzeug gemäß irgendeinen der Ansprüche 3 bis 5, wobei die Anzeige-Einheit (15) konfiguriert ist um auf der Anzeige-Fläche (15a) anzuzeigen, aufgrund der zugehörigen Charakteristik, gespeichert in dem zugehörigen Charakteristik-Speicher (72), jede der Abbildungen von den Charakteristik-Zuständen, zugeordnet mit der momentan ausgewählten zugehörigen Charakteristik, von den ersten Charakteristik-Zustands-Abbildungen und den zweiten Charakteristik-Zustands-Abbildungen in einem Aspekt, unterschiedlich von dem Aspekt der anderen Abbildungen.

7. Ein Sattel-Typ-Fahrzeug gemäß irgendeinem der Ansprüche 3 bis 6, wobei die Anzahl von Durchführungen einer Betätigung der Betätigungs-Einheit (41 bis 43, 120), gefordert um eine der ersten zugehörigen Charakteristik und der zweiten zugehörigen Charakteristik anzuordnen, die auswählbar sind nachdem die Anzeige-Einheit (15) beginnt die erste Fahrzeug-Charakteristik-Abbildung (152 bis 158), die zweite Fahrzeug-Charakteristik-Abbildung (152 bis 158), die ersten Fahrzeug-Charakteristik-Zustands-Abbildungen (1 bis 9, A-1 bis A-3, M-1 bis M-3), die zweiten Fahrzeug-Charakteristik-Zustands-Abbildungen (1 bis 9, A-1 bis A-3, M-1 bis M-3), die zugehörigen Charakteristik-Abbildung (151), die erste zugehörige Charakteristik-Abbildung (A bis D), und die zweite zugehörige Charakteristik-Abbildung (A bis D) anzuzeigen, ist kleiner als die Anzahl von Durchführungen einer Betätigung der Betätigungs-Einheit (41 bis 43, 120), gefordert zur Anordnung der ersten Fahrzeug Charakteristik oder der zweiten Fahrzeug Charakteristik die von den Charakteristik-Zuständen auswählbar sind.

8. Ein Sattel-Typ-Fahrzeug gemäß irgendeinem der Ansprüche 3 bis 7, wobei während die Anzeige-Einheit (15) anzeigt, auf der Anzeige-Fläche (15a), die erste Fahrzeug-Charakteristik-Abbildung (152 bis 158), die zweite Fahrzeug-Charakteristik-Abbildung (152 bis 158), die ersten Fahrzeug-Charakteristik-Zustands-Abbildungen (1 bis 9, A-1 bis A-3, M-1 bis M-3), die zweiten Fahrzeug-Charakteristik-Zustands-Abbildungen (1 bis 9, A-1 bis A-3, M-1 bis M-3), die zugehörige Charakteristik-Abbildung (151), die erste zugehörige Charakteristik-Abbildung (A bis D), und die zweite zugehörige Charakteristik-Abbildung (A bis D), ist ein Zustand, in dem eine von der ersten zugehörenden Charakteristik und der zweiten zugehörenden Charakteristik auswählbar ist, und einen Zustand, in dem die erste Fahrzeug-Charakteristik oder die zweite Fahrzeug-Charakteristik auswählbar ist von dem Charakteristik-Zuständen, erreicht.

9. Ein Sattel-Typ-Fahrzeug gemäß irgendeinem der Ansprüche 1 bis 8, wobei die Anzeige-Fläche (15a) im Wesentlichen rechtwinklig in Form ist, die eine von der Fahrzeug-Vorwärts-/Rückwärts-Richtung und der Fahrzeug-Links-/Rechts-Richtung ist parallel zu Kurz-Seiten von der rechtwinkligen Anzeige-Fläche (15a), und die andere von der Fahrzeug-Vorwärts-/Rückwärts-Richtung und der Fahrzeug-Links-/Rechts-Richtung ist parallel zu den Lang-Seiten der rechtwinkligen Anzeige-Fläche (15a).

10. Ein Sattel-Typ-Fahrzeug gemäß irgendeinem der Ansprüche 3 bis 7, wobei die Betätigungs-Einheit (41 bis 43, 120) einen ersten Schalter (41) und einen zweiten Schalter (42) beinhaltet, die konfiguriert sind um jeweils Betätigungen mit unterschiedlichen Umfang zu empfangen,
wenn der erste Schalter (41) betätigt ist, ist die Anzeige-Einheit (15) konfiguriert um einen Cursor auf der Anzeige zu bewegen, um eine Linie, entlang welcher die ersten Fahrzeug-Charakteristik-Zustands-Abbildungen (1 bis 9, A-1 bis A-3, M-1 bis M-3) vorgesehen sind, eine Linie entlang welcher die zweiten Fahrzeug-Charakteristik-Zustands-Abbildungen (1 bis 9, A-1 bis A-3, M-1 bis M-3) vorgesehen sind, und eine Linie entlang welcher die erste zugehörige Charakteristik-Abbildung (A bis D) und die zweite zugehörige Charakteristik-Abbildung (A bis D) vorgesehen sind, anzuzeigen, wenn der zweite Schalter (42) betätigt ist, wird eine Charakteristik oder eine zugehörige Charakteristik entsprechend zu einer Abbildung, vorgesehen entlang einer Linie die durch den Cursor angezeigt ist, auswählbar, die Linie ist eine, von den Linien entlang welcher die ersten Fahrzeug-Charakteristik-Zustands-Abbildungen (1 bis 9, A-1 bis A-3, M-1 bis M-3) vorgesehen sind, die Linie entlang welcher die zweiten Fahrzeug-Charakteristik-Zustands-Abbildungen (1 bis 9, A-1 bis A-3, M-1 bis M-3) vorgesehen sind, und die Linie entlang welcher die erste zugehörende Charakteristik-Abbildung (A bis D) und die zweite zugehörende Charakteristik-Abbildung (A bis D) vorgesehen sind.

## Revendications

1. Véhicule de type à selle comprenant :
un cadre de véhicule (4) supportant une source de puissance,
un siège (11) monté sur le cadre de véhicule (4),
un guidon (5) disposé en avant du siège (11),
une section de préhension droite (5c, 5e) et une section de préhension gauche (5d, 5f) qui sont respectivement disposées à l'extrémité droite et à l'extrémité gauche du guidon (5) dans la direction gauche droite du véhicule,
une unité d'affichage (15) qui est disposée en avant du siège (11) dans la direction avant arrière du véhicule et entre la section de préhension droite (5c, 5e) et la section de préhension gauche (5d, 5f) dans la direction gauche droite du véhicule, et qui inclut une surface d'affichage (15a),
une unité d'exploitation (41 à 43, 120) qui est supportée par le guidon (5), qui est configurée pour pouvoir être mise en oeuvre par une main saisissant au moins l'une de la section de préhension droite (5c, 5e) et de la section de préhension gauche (5d, 5f) et qui est reliée électriquement à l'unité d'affichage (15),
et le véhicule de type à selle est **caractérisé en ce qu'**il comprend en outre :
un contrôleur de changement des caractéristiques du véhicule (101, 201) qui est configuré pour pouvoir modifier, en sélectionnant l'un des états de caractéristiques, une première caractéristique du véhicule et une seconde caractéristique du véhicule différentes l'une de l'autre, en fonction du contenu d'une manoeuvre de l'unité d'exploitation (41 à 43, 120),
l'unité d'affichage (15) est configurée pour afficher sur la surface d'affichage (15a) un premier icône de caractéristique du véhicule (152 à 158) indiquant la première caractéristique du véhicule et des premiers icônes d'états de caractéristiques du véhicule (1 à 9, A-1 à A-3, M-1 à M-3) indiquant les états de caractéristiques de la première caractéristique du véhicule selon un aspect consistant en un alignement dans l'une de la direction avant arrière du véhicule et de la direction gauche droite du véhicule, un second icone de caractéristique du véhicule (152 à 158) indiquant la seconde caractéristique du véhicule et des seconds icones d'états de caractéristiques du véhicule (1 à 9, A-1 à A-3, M-1 à M-3) indiquant les états de caractéristiques de la seconde caractéristique du véhicule selon un aspect consistant en un alignement dans la même parmi la direction avant arrière du véhicule et la direction gauche droite du véhicule, le premier icone de caractéristique du véhicule (152 à 158) et le second icone de caractéristique du véhicule (152 à 158) étant alignés dans l'autre de la direction avant arrière du véhicule et de la direction gauche droite du véhicule, tout comme les premiers icones d'états de caractéristiques du véhicule (1 à 9, A-1 à A-3, M-1 à M-3) et les seconds icones d'états de caractéristiques du véhicule (1 à 9, A-1 à A-3, M-1 à M-3) étant alignés dans la même autre direction parmi la direction avant arrière du véhicule et la direction gauche droite du véhicule, au moins un icone correspondant à un état de caractéristique en cours de sélection parmi les premiers icones d'états de caractéristiques du véhicule (1 à 9, A-1 à A-3, M-1 à M-3) et les seconds icones d'états de caractéristiques du véhicule (1 à 9, A-1 à A-3, M-1 à M-3) étant disposé selon un aspect différent des aspects des autres icones.

2. Véhicule de type à selle selon la revendication 1, comprenant en outre une mémoire de caractéristique apparentée (72) configurée pour mémoriser une caractéristique apparentée dans laquelle un premier état de caractéristique du véhicule, qui est l'un des états de caractéristiques de la première caractéristique du véhicule, est associé à un second état de caractéristique du véhicule qui est l'un des états de caractéristiques de la seconde caractéristique du véhicule, dans lequel
la mémoire de caractéristique apparentée (72) est configurée pour mémoriser au moins une première caractéristique apparentée et une seconde caractéristique apparentée dont l'une est sélectionnée en fonction du contenu d'une manoeuvre de l'unité d'exploitation (41 à 43, 120).

3. Véhicule de type à selle selon la revendication 2, dans lequel l'unité d'affichage (15) est configurée pour afficher sur la surface d'affichage (15a), sur la base de la caractéristique apparentée mémorisée dans la mémoire de caractéristique apparentée (72), un icone de caractéristique apparentée (151) indiquant la caractéristique apparentée, le premier icone de caractéristique apparentée (A à D) indiquant la première caractéristique apparentée et le second icone de caractéristique apparentée (A à D) indiquant la seconde caractéristique apparentée selon un aspect consistant en un alignement dans l'une de la direction avant arrière du véhicule et de la direction gauche droite du véhicule.

4. Véhicule de type à selle selon la revendication 3, dans lequel l'unité d'affichage (15) est configurée pour afficher sur la surface d'affichage (15a), sur la base de la caractéristique apparentée mémorisée dans la mémoire de caractéristique apparentée (72), l'icone de caractéristique apparentée (151) et le premier icone de caractéristique du véhicule (152 à 158) alignés dans l'autre direction parmi la direction avant arrière du véhicule et la direction gauche droite du véhicule, et le premier icone de caractéristique apparentée (A à D), le second icone de caractéristique apparentée (A à D) et les premiers icones d'états de caractéristiques du véhicule (1 à 9, A-1 à A-3, M-1 à M-3) sont alignés dans l'autre direction parmi la direction avant arrière du véhicule et la direction gauche droite du véhicule.

5. Véhicule de type à selle selon la revendication 3 ou la revendication 4, dans lequel l'unité d'affichage (15) est configurée pour afficher sur la surface d'affichage (15a), sur la base de la caractéristique apparentée mémorisée dans la mémoire de caractéristique apparentée (72), une icone d'au moins une caractéristique apparentée en cours de sélection parmi la première caractéristique apparentée et la seconde caractéristique apparentée selon un aspect différent des aspects des autres icones.

6. Véhicule de type à selle selon l'une quelconque des revendications 3 à 5, dans lequel l'unité d'affichage (15) est configurée pour afficher sur la surface d'affichage (15a), sur la base de la caractéristique apparentée mémorisée dans la mémoire de caractéristique apparentée (72), chacun des icones des états de caractéristiques associés à la caractéristique apparentée en cours de sélection parmi le ou les icones de premier état de caractéristique et les icones de second état de caractéristique selon un aspect différent des aspects des autres icones.

7. Véhicule de type à selle selon l'une quelconque des revendications 3 à 6, dans lequel le nombre de fois indiquant la manoeuvre de l'unité d'exploitation (41 à 43, 120) requise pour agencer l'une de la première caractéristique apparentée et de la seconde caractéristique apparentée pour qu'elles puissent être sélectionnées après que l'unité d'affichage (15) a commencé à afficher le premier icone de caractéristique du véhicule (152 à 158), le second icone de caractéristique du véhicule (152 à 158), les premiers icones d'états de caractéristiques du véhicule (1 à 9, A-1 à A-3, M-1 à M-3), les seconds icones d'états de caractéristiques du véhicule (1 à 9, A-1 à A-3, M-1 à M-3), l'icone de caractéristique apparentée (151), le premier icone de caractéristique apparentée (A à D) et le second icone de caractéristique apparentée (A à D), est plus petit que le nombre de fois indiquant la manoeuvre de l'unité d'exploitation (41 à 43, 120) requise pour agencer la première caractéristique du véhicule ou la seconde caractéristique du véhicule pour qu'elle puisse être sélectionnée d'après les états de caractéristiques.

8. Véhicule de type à selle selon l'une quelconque des revendications 3 à 7, dans lequel, alors que l'unité d'affichage (15) affiche, sur l'unité d'affichage (15a), le premier icone de caractéristique du véhicule (152 à 158), le second icone de caractéristique du véhicule (152 à 158), les premiers icones d'états de caractéristiques du véhicule (1 à 9, A-1 à A-3, M-1 à M-3), les seconds icones d'états de caractéristiques du véhicule (1 à 9, A-1 à A-3, M-1 à M-3), l'icone de caractéristique apparentée (151), le premier icone de caractéristique apparentée (A à D) et le second icone de caractéristique apparentée (A à D), il est établi un état dans lequel l'une de la première caractéristique apparentée et de la seconde caractéristique apparentée peut être sélectionnée et un état dans lequel la première caractéristique du véhicule ou la seconde caractéristique du véhicule peut être sélectionnée à partir des états de caractéristiques.

9. Véhicule de type à selle selon l'une quelconque des revendications 1 à 8, dans lequel la surface d'affichage (15a) est de forme pratiquement rectangulaire, la première de la direction avant arrière du véhicule et de la direction gauche droite du véhicule est parallèle aux côtés courts de la surface d'affichage (15a) rectangulaire, et l'autre de la direction avant arrière du véhicule et de la direction gauche droite du véhicule est parallèle aux côtés longs de la surface d'affichage (15a) rectangulaire.

10. Véhicule de type à selle selon l'une quelconque des revendications 3 à 7, dans lequel l'unité d'exploitation (41 à 43, 120) inclut un premier commutateur (41) et un second commutateur (42) qui sont configurés respectivement pour recevoir des manoeuvres présentant des contenus différents,
lorsque le premier commutateur (41) est manoeuvré, l'unité d'affichage (15) est configurée pour déplacer un curseur sur l'afficheur afin d'indiquer une ligne le long de laquelle les premiers icones d'états de caractéristiques du véhicule (1 à 9, A-1 à A-3, M-1 à M-3) sont disposés, une ligne le long de laquelle les seconds icones d'états de caractéristiques du véhicule (1 à 9, A-1 à A-3, M-1 à M-3) sont disposés et une ligne le long de laquelle le premier icone de caractéristique apparentée (A à D) et le second icone de caractéristique apparentée (A à D) sont disposés,
lorsque le second commutateur (40) est manoeuvré, une caractéristique ou une caractéristique apparentée correspondant à un icone disposée le long d'une ligne indiquée par le curseur deviennent sélectionnables, ladite ligne étant l'une de la ligne le long de laquelle les premiers icones d'états de caractéristiques du véhicule (1 à 9, A-1 à A-3, M-1 à M-3) sont disposés, la ligne le long de laquelle les seconds icones d'états de caractéristiques du véhicule (1 à 9, A-1 à A-3, M-1 à M-3) sont disposés et la ligne le long de laquelle le premier icone de caractéristique apparentée (A à D) et le second icone de caractéristique apparentée (A à D) sont disposés.
